# EUROPEAN PATENT APPLICATION

(11) **EP 4 517 939 A1**
(43) Date of publication of application: **05.03.2025**
(21) Application number: 23835437.7
(22) Date of filing: 30.06.2023
(51) Int. Cl.: H01M 10/658, B32B 5/02, D21H 13/38, D21H 13/40

(54) **HEAT-INSULATING AND FLAME-SHIELDING SHEET, AND ASSEMBLED BATTERY AND BATTERY MODULE PACKAGE USING SAME**

(30) Priority: 05.07.2022 JP 2022108304
(71) Applicant: Imae Industries, Ltd., Takatsuki-shi Osaka 569-0012 (JP)
(72) Inventor: IMAE Kenji, Takatsuki-shi, Osaka 569-0012 (JP); IMAE Yoshihiko, Takatsuki-shi, Osaka 569-0012 (JP); SHIRAI Takashi, Takatsuki-shi, Osaka 569-0012 (JP); ARAI Tetsuro, Takatsuki-shi, Osaka 569-0012 (JP)
(74) Representative: Isarpatent
(86) International application number: PCT/JP2023/024414
(87) International publication number: WO 2024/009905

(57) **Abstract**

The present invention provides a lightweight and thin thermal insulating/flame barrier sheet that is used between cells within a battery pack where battery cells are connected and stacked in series or parallel. This thermal insulating/flame barrier sheet has a thickness of 3 mm or less, and is obtained by papermaking process using a suspension containing 25 to 70% by weight of a silica-based inorganic fiber having a hydroxyl group; 2 to 25% by weight of a glass fiber; 5 to 40% by weight of a fibrous mineral; 3 to 20% by weight of a binder; and 0 to 45% by weight of a thermal insulating inorganic particle. The thermal insulating inorganic particle includes a hydrophilized aerogel particle obtained by treating the surfaces of hydrophobic aerogel particle having a porosity of 80% or more and an average particle size of 5 to 200 µm, with a hydrophilizing agent.

## Description

### TECHNICAL FIELD

The present invention relates to a thermal insulating/flame barrier sheet positioned between cells in a battery pack or battery module used as a power source of the electric motor for battery electric vehicle or hybrid electric vehicle, as well as a thermal insulating/flame barrier sheet that can be used for thermal insulation/flame barrier of a housing for a battery pack and/or battery module containing a plurality of cells. The present invention also relates to a battery pack and/or battery module package using the thermal insulating/flame barrier sheet.

### BACKGROUND

A battery electric vehicle or a hybrid electric vehicle driven by an electric motor is equipped with a battery pack in which cells are connected in series or in parallel to form a module, as a power source therefore. A lithium ion secondary battery having a high capacity and providing a high output is mainly used as the battery cell.

In the case that a battery cell temperature within a battery module rapidly rises due to a short circuit or overcharge, the cell triggers a thermal runaway and the thermal runaway spreads to adjacent cells. Moreover, the cell under the thermal runaway may spout out the hot lithium electrolyte, which threatens serious events such as explosion.

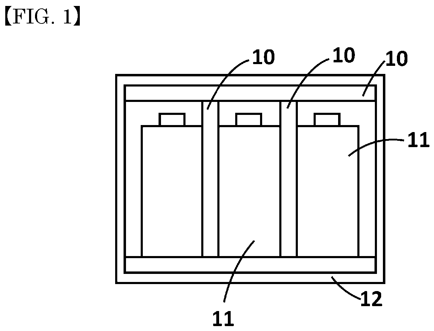

In order to reduce the risk associated with thermal runaway in a battery module, for example as shown in Fig. 1, placing a thermal insulating/flame barrier sheet 10 between battery cells 11, 11 is proposed. The sheet 10 may mitigate the propagation of thermal runway and may suppress the spread of fire from the flame of the trigger cell. A plurality of battery cells are usually packed together in the housing 12.

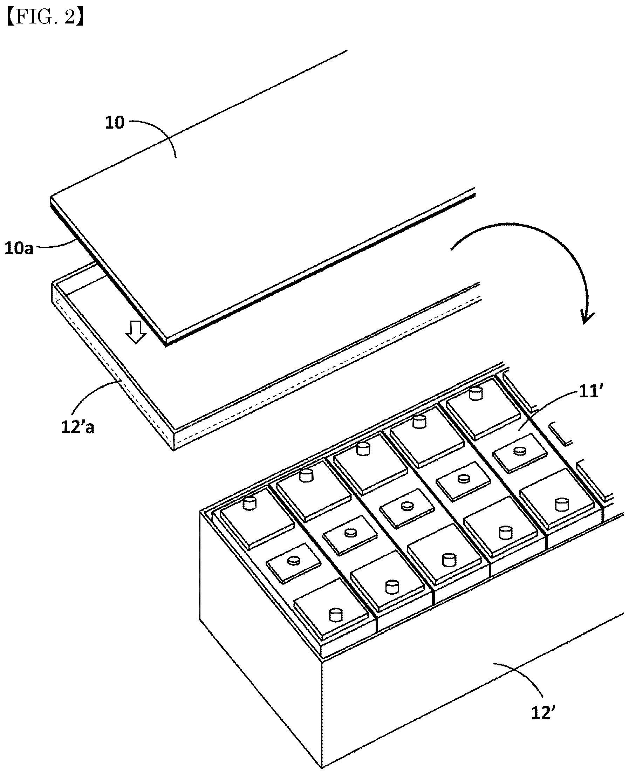

In a typical packing for a battery module shown in Fig. 2, rectangular battery cells 11' are aligned in parallel, housed in a housing 12', and then sealed with a lid 12'a of the housing 12'. A thermal insulating/flame barrier sheet 10 is attached to the back surface of this lid 12'a using an adhesive 10a. The sheet 10 may suppress the spreading of flame and/or hot lithium electrolyte from the cell under the thermal runaway, thereby preventing from damaging a peripheral equipment.

A mica sheet (a sheet containing at least 80% mica) has been used as a conventional material with a similar heat and flame resistance properties. However, due to its high bulk density, there is a need for a lighter sheet that provides nearly the same level of thermal insulation and flame barrier, especially for use in battery electric vehicles.

A use of woven fabric, nonwoven fabric, or paper, all of which are made of inorganic fibers, is proposed for a lightweight, thermal insulating, and flame resistant sheet. Alumina fiber as an inorganic fiber is excellent because of its high heat resistance (melting point of about 2000°C), flame resistance, and high insulation property, but is more expensive than other inorganic fibers and therefore is not appropriate option for a constituent fiber of a sheet. Under these circumstances, a thermal insulating sheet made of a combination of an inorganic fiber and an inorganic particle has been proposed. This sheet may meet requirements of thermal insulating property and flame barrier.

For example, JP2021-531631A (Patent Document 1) suggests a flame resistant material comprising two kinds of glass fibers having a different diameter from each other; a particulate filler mixture of at least two selected from the group consisting of glass bubbles, kaolin clay, talc, mica, calcium carbonate and alumina trihydrate; and an inorganic binder. The flame resistant material is provided in a form of sheet made by papermaking technique.

Also, WO2019/187313 (Patent Document 2) suggests a thermal insulating sheet sandwiched between the stacked battery cells in a battery pack where multiple battery cells are fixed in a stacked state. The thermal insulating sheet is an inorganic fiber sheet where inorganic particles (inorganic hollow particles or inorganic foamed particles) are embedded in gaps between inorganic fibers. Examples of inorganic fibers include magnesium silicate (sepiolite), rock wool, ceramic fiber, glass fiber, potassium titanate fiber, and calcium silicate. Example 1 discloses a thermal insulating sheet produced by preparing a slurry containing 10% by weight of glass fiber and 10% by weight of nylon fiber with 80% by weight of magnesium silicate (sepiolite), and undergoing papermaking with the slurry to obtain a sheet-like web, followed by drying and hot-pressing to produce an inorganic fiber sheet with a thickness of 0.7 mm. Thus produced inorganic fiber sheet was sandwiched between polyethylene films (thickness of 50 µm) via adhesive to obtain the thermal insulating sheet. Note that no examples containing inorganic particles are disclosed.

JP2021-034278A (Patent Document 3) suggests a thermal insulating sheet obtained by papermaking process using a slurry prepared by dispersing two types of inorganic particles (a silica nanoparticle as a first particle and a metal oxide particle such as titania and alumina as a second particle), linear or acicular inorganic fibers (glass fibers in the examples), and optionally binders (organic binders such as polymeric flocculating agent and acrylic emulsion, and inorganic binder such as silica sol and alumina sol), in water. The silica nanoparticle can act as a thermal insulating material, and the more the content of it, the more enhanced the thermal insulation properties. Based on this, it is proposed that the first inorganic particle, second inorganic particle, and an inorganic balloon are contained in an amount of 50 to 80% by weight in the entire thermal insulating sheet.

In Example, a thermal insulating sheet obtained by papermaking process using a slurry containing 8% by weight of pulp fiber in addition to the above-mentioned constituent components was disclosed.

JP6997263B and JP7000626B (Patent Documents 4 and 5) suggest a thermal transfer suppressing sheet containing two types of inorganic fibers differing in diameter and an inorganic particle capable of providing a thermal insulating effect. The inorganic particle includes an oxide particle such as alumina and titania, and a porous or hollow particle with high porosity. Regarding the two types of inorganic fibers, a first fiber has a larger diameter and is linear while a second fiber has a smaller diameter and is dendritic. The documents describe that the fibers in those combinations may be entangled to hold the inorganic particles stably even at an amount of 30 to 90% by weight, and the thermal transfer suppressing sheet could endure a thermal runaway occurred at high temperatures. However, these documents fail to disclose a specific kind or type concerning the first and second inorganic fibers. Regarding the thermal transfer suppressing sheet manufactured, there is no disclosure about thermal insulation effect or prevention of powder falling off.

By the way, aerogel (porous silica particle) is known as a porous particle with excellent thermal insulation properties.

JP2015-163815A (Patent Document 6) suggests a thermal insulating material (thermal insulating sheet) in which from 35 to 210 parts by weight of aerogel particles (average particle size of 2-140µm and specific surface area of 400m²/g or more) having a high thermal insulating effect are blended per 100 parts by weight of the main fiber. The thermal insulating sheet further contains at least one water-soluble polymer selected from the group consisting of cationic polymer and amphoteric polymer, and/or binder containing a synthetic fiber having a relatively low melting point.

The main fiber includes a synthetic fiber such as polyester fiber and aramid fiber, and an inorganic fiber such as ceramic fiber, alumina fiber, and glass fiber ([0018]). However, sheets produced in the examples were only sheets using an organic fiber such as pulp, polyester fiber, and vinylon binder fiber.

There is a disclosure in [0026] that the use of cationic polymer and/or amphoteric polymer as a binder can promote flocculation of pulp and porous silica particles and increase yield due to methyl silicate particles which are anionic or amphoteric.

In a specific example, a main fiber (an organic fiber such as pulp, polyester fiber, and vinylon binder fiber), an aerogel, and a water-soluble polymer were added to water and stirred to prepare a papermaking slurry, and a thermal insulating sheet was produced by a papermaking technique. Thus obtained thermal insulating sheet was wrapped around a paper cup or stainless steel rod, and the temperature on the surface of the thermal insulation sheet was monitored for 60 seconds in both cases that hot water (95°C) was poured into the paper cup and that the stainless steel rod was heated to 100°C. The measurement results are shown.

Furthermore, JP2020-200901A (Patent Document 7) suggests a thermal insulating sheet comprising a thermal insulating component having many nanometer-sized pores such as an aerogel particle, a glass bead, or a ceramic bead, and a biosoluble rock wool as a base fiber. The document discloses a felt-like or paper-like thermal insulating sheet having a thickness of 1.72 to 6.3 mm which was formed from a slurry containing a fiber, a thermal insulating component, and a binder by papermaking technique (Table 1 in Examples).

In the disclosure, starch, polyvinyl alcohol, acrylic starch, and acrylic polyvinyl alcohol are exemplified as the binder ([0025]), and 50 to 300 parts should be mixed with 100 parts by weight of the base fiber (rock wool) ([0026]). In the example of Patent Document 7, an aerogel dispersion was added to a biosoluble rock wool dispersion as a fiber dispersion to prepare a papermaking slurry. The aerogel dispersion was prepared by admixing aerogel to a binder-containing aqueous solution.

A thermal insulating sheet was produced by applying such a papermaking slurry onto a laminate of filter paper and mesh, and heating and pressurizing the mesh and filter paper in a stacked state. In Examples, the thermal conductivity of the produced thermal insulating sheets was measured (hot wire method) and the results were shown.

### PRIOR ART

### PATENT DOCUMENT

Patent Document 1: JP2021-531631A
Patent Document 2: WO2019/187313
Patent Document 3: JP2021-034278A
Patent Document 4: JP6997263B
Patent Document 5: JP7000626B
Patent Document 6: JP2015-163815A
Patent Document 7: JP2020-200901A

### SUMMARY OF THE INVENTION

### TECHNICAL PROBLEM TO BE SOLVED BY THE INVENTION

A conventional glass fiber such as E-glass fiber is low-priced as a typical inorganic fiber, but can be used up to 700°C or less. Because the glass fiber is melted during thermal runaway occurred at a temperature higher than 700°C, and a sheet made of the glass fiber cannot keep its original shape. The Patent Document 1 discloses in Example that the sheet is durable during a torch flame test by reducing the content of glass fiber to the range of 7 to 25% by weight in the coexistence of clay, mica, and glass bubbles.

The evaluation tests, including the torch flame test, were conducted on a multilayered sheet. The multilayered sheet was created by laminating inorganic papers with sodium silicate as an inorganic binder, followed by pressurization and drying. Flame test results indicated that a thin multilayered sheet developed holes when burned.

In Patent Document 2, the glass fiber content is set at 10% by weight or less, but there are no examples of the sheet comprising a particle. The document 2 proposes that, if a sheet contains an inorganic particle such as aerogel, the sheet should be sandwiched with plastic films. A thermal insulating sheet interposed between batteries is held by the batteries. Therefore, even after the plastic film is burnt out during thermal runaway, the thermal insulating sheet may still remain between batteries and may suppress thermal transfer. However, in a use that the insulating sheet containing inorganic particles is attached to a ceiling of the housing as shown in Fig. 2, even if the plastic film encloses the sheet, the particles would fall off once the film is burnt out.

Any sheet suggested in Patent Documents 3-5 contains inorganic particles in a content of 30% by weight or more, and further, 50% by weight or more. In Patent Document 3, with respect to a paper with a thickness of 1 mm containing 10% by weight of glass fiber and 8% by weight of pulp fiber, thermal conductivity up to 850°C was measured by varying the content ratio of silica nanoparticles and titania particles, but flame test was not conducted. It is unknown whether or not, if the paper is fixed to a ceiling of the housing for thermal insulation, the paper can retain its original shape when exposed to flame at nearly 1000°C. Furthermore, Patent Documents 4 and 5 provide no specific example showing thermal insulating effect by particles still remained in the sheet.

Patent Document 6 discloses a test result of a thermal insulation effect by use of aerogel, but the test was conducted using a heat source having a temperature around 100°C. A sheet used for protecting lithium ion cell from thermal runaway is required for flame barrier property and insulation property against high temperatures of 500°C or higher, because the temperature of the cell undergoing thermal runaway rises to 500°C or higher. However, the document 6 does not clarify whether or not a proposed sheet may suffice the requirements.

Patent Document 7 proposes a use of the sheet as a material for a thermal insulating container for pharmaceuticals or foods ([0002]) as well as a use of the sheet for thermal insulation of electronic components ([0003]), but not disclose a use as a protective sheet of lithium ion batteries from thermal runaway. Measurement results of thermal conductivity are provided; however, the sheet's flame barrier property and thermal insulation at 600°C or higher are not disclosed. It is unclear if the sheet meets the requirements necessary for a protective sheet used for a flame barrier and thermal insulation at such high temperatures.

A biosoluble rock wool used as a base fiber of the sheet is an inorganic fiber, and nonflammable (fire-resistant). Moreover, the biosoluble rock wool may be resistant to heat up to about 700°C. On the other hand, rock wool contains non-fibrous particles (called as shot), which are non-fiberized portions during the manufacturing method. The rock wool is manufactured by melting raw materials such as slag and rock in an electric furnace at 1500 to 1600°C, blowing the molten material away using centrifugal force, and solidifying it in the air. In this method, non-fibrous particles may be reduced during a papermaking process, however, a complete removal of it is difficult. As a result, a thermal insulating sheet comprising a biosoluble rock wool contains shots at a certain rate. The shot may affect a thermal insulating property and flame barrier property. Moreover, the non-fibrous particles may damage an outer wall of the cell contacting with the sheet.

Under these situations, the purpose of the invention is to provide a lightweight and thin thermal insulating/flame barrier sheet with a thickness of more than 0.5 mm, 1 mm or more, and 3 mm or less, preferably 2 mm or less. The sheet can retain its original shape for at least 10 minutes even when exposed to flame at temperatures close to 1000°C, and may suffice flame barrier property and thermal insulation property.

### MEANS FOR SOLVING THE PROBLEM

The present inventors have studied on fibers and sheets in order to achieve the production of a lightweight, thin sheet that provide thermal insulation and flame barrier properties, both under normal conditions and when exposed to flames (1000°C or higher). Normal use refers to conditions where the temperature rise is controlled to prevent triggering a thermal runaway.

The lithium ion battery used as a power source for EV vehicles is made of stacked cells. For securing heat resistance, the thermal insulating/flame barrier sheet placed between cells should be made of inorganic materials as its main components and be thin and lightweight. A wet papermaking method is known as a method for producing a lightweight and thin sheet with a thickness of more than 0.5 mm, 1 mm or more, less than 3 mm, preferably 2 mm or less, from inorganic materials.

An aerogel particle, which is known as a high thermal insulator, exhibits excellent thermal insulation due to nano-sized air pockets. The aerogel has a low density and hydrophobic surface. This makes difficulty in entangling fibers with aerogel particles in a wet papermaking process in the case of using water as a dispersion medium. Aerogel particles should be homogeneously dispersed and mixed with fibers in a slurry or fiber-containing suspension for papermaking in order that the aerogels exert a thermal insulating effect.

In addition, the thermal insulating effect of the aerogel particle is known to be reduced in a high temperature range of 500°C or higher where the proportion of radiant heat increases. For this reason, another thermal insulation mechanism in addition to silica aerogel particles is desirable for thermal insulation in a high temperature where thermal runaway occurs.

On the other hand, clay mineral may act as an excellent flame barrier, however, the clay has a high thermal conductivity. This means that the more content of the clay contained in the sheet, the less thermal insulating performance of the sheet. Furthermore, clay causes to be clogged in the filtration and dewatering process with a mesh in a wet papermaking method, which actually makes difficult to produce a sheet having a thickness of 1 mm or more. In this connection, a sheet should be obtained by laminating a plurality of paper like an inorganic paper produced in Patent Document 1.

The inventors have discovered that a silica-based inorganic fiber having a hydroxyl group at its terminal can absorb heat energy through a dehydration condensation reaction. This helps to mitigate a temperature spike during an early stage of thermal runaway occurred when exposed to high temperatures.

In the case of a silica-based inorganic fiber having a hydroxyl group at its terminal, the reaction occurs between about 300 and 600°C, generating water and consuming thermal energy for water evaporation. Since the dehydration condensation reaction is endothermic reaction, the temperature increase is suppressed, allowing the silica-based inorganic fiber to delay an initial temperature rise.

The inventers considered that, when the silica-based inorganic fiber as a base fiber contained in a thermal insulating/flame barrier sheet, the silica-based fiber enhances thermal insulation. The silica-based fiber may assist with insulation at high temperatures in norm, and even when the aerogel particle's insulation effect decreases. Additionally, the silica-based inorganic fiber can act as a flame barrier, preventing a temperature spike that triggers thermal runaway. These phenomena might reduce the risk of propagation or spread of thermal runaway in lithium ion batteries. Thus the present invention was completed.

According to the invention, a thermal insulating/flame barrier sheet comprises 25 to 70% by weight of a silica-based inorganic fiber having a hydroxyl group; 2 to 25% by weight of glass fiber; 5 to 40% by weight of fibrous mineral; 3 to 20% by weight of binder; and 0 to 45% by weight of thermal insulating inorganic particle, and has a thickness of 3 mm or less, wherein the thermal insulating inorganic particle comprises an hydrophilized aerogel particle obtained by treating the surface of hydrophobic aerogel particle having a porosity of 80% or more and an average particle size of 5 to 200 µm.

The ratio in weight of the silica-based inorganic fiber to the glass fiber, i.e. silica-based inorganic fiber/glass fiber, is preferably from 30/1 to 1.5/1.

The hydrophobic aerogel particle preferably has a contact angle for water droplet on a surface of the hydrophobic aerogel particle is preferably 100 degrees or more.

The hydrophilized aerogel particle is obtained by bringing an aerogel particle surface into contact with an organic solvent, a surfactant, or a hydrophilic polymer.

According to one aspect of the invention, the hydrophilized aerogel particle is obtained by covering at least a portion of the hydrophobic aerogel particle with a hydrophilic polymer. A preferable hydrophilic polymer is a polymer having hydroxyl groups.

The hydrophilic polymer's weight relative to the hydrophobic aerogel particle in the hydrophilized aerogel particle is preferably from 1/2 to 1/100 in terms of hydrophilic polymer/hydrophobic aerogel particle (weight ratio).

The fibrous mineral is preferably at least one selected from the group consisting of sepiolite, palygorskite, potassium titanate whiskers, and wollastonite.

The binder preferably includes a thermoplastic resin fiber, and may further include an organic flocculating agent.

Further, the binder may include an inorganic binder, and examples of the inorganic binder include colloidal silica and/or inorganic metal salt.

The thermal insulating/flame barrier sheet of the disclosure has a bulk density of 100 to 400 kg/m³.

According to another aspect of the invention, a method for manufacturing a thermal insulating/flame barrier sheet containing a thermal insulating inorganic particle is provided. The manufacturing method comprises preparing a slurry containing a hydrophilized aerogel wherein the slurry comprises a silica aerogel particle having a hydrophobic surface, having a porosity of 80% or more, and having an average particle size of 5 to 200 µm is dispersed in an aqueous solution containing a hydrophilizing agent;
preparing a suspension by adding and mixing the slurry containing the hydrophilized aerogel to an aqueous dispersion containing silica-based inorganic fiber having a hydroxyl group, glass fiber, fibrous mineral, and a binder, wherein the suspension contains 25 to 70% by weight of the silica-based inorganic fiber, 2 to 25% by weight of the glass fiber, 5 to 40% by weight of the fibrous mineral, 3 to 20% by weight of the binder, and more than 0 to 45% by weight of the hydrophilized aerogel; and
papermaking process using the suspension to obtain a sheet with a thickness of less than 3 mm.

A manufacturing method according to one embodiment comprises preparing a slurry containing a hydrophilized aerogel obtainable by dispersing a silica aerogel particle having a hydrophobic surface, a porosity of 80% or more, and an average particle size of 5 to 200 µm, in an aqueous solution of a water-soluble polymer;
adding and mixing the slurry containing the hydrophilized aerogel, to an aqueous dispersion containing a silica-based inorganic fiber having a hydroxyl group, a glass fiber, a fibrous mineral, and a binder including thermoplastic resin fiber; and
papermaking process using the resulting mixed solution, followed by heating and pressurization to obtain a sheet with a thickness of less than 3 mm.

If a surfactant or an organic solvent is contained in the slurry containing a hydrophilized aerogel, the content of the surfactant is preferably 10% by weight or less, and the content of the organic solvent is preferably 10% by weight or less.

The present invention encompasses a battery pack and a battery module each of which contains a disclosed thermal insulating/flame barrier sheet.

In one embodiment of the battery pack or battery module, the battery pack or battery module comprises battery cells connected in series or in parallel are housed in a housing, and a thermal insulating/flame barrier sheet placed between the battery cells.

In another embodiment of the battery pack or battery module, the battery pack or battery module comprises battery cells connected in series or in parallel wherein the battery cells are housed in a housing, and wherein a thermal insulating/flame barrier sheet is attached to an inner wall of the housing that is in contact with the battery cells.

### EFFECT OF THE INVENTION

The thermal insulating/flame barrier sheet of the present invention is lightweight, and may exhibit excellent thermal insulation performance in a normal use. Moreover, the thermal insulating/flame barrier sheet may withstand a temperature spike caused from thermal runaway, as well as exposure to flame of nearly 1000°C for 10 minutes. Therefore, thermal runaway of the lithium ion battery can be mitigated.

### BRIEF DESCRIPTION OF THE DRAWINGS

Fig. 1 illustrates a schematic diagram showing a configuration of a battery pack in which a thermal insulating/flame barrier sheet is interposed between cells.
Fig. 2 illustrates a schematic diagram showing a configuration example of a battery module in which a thermal insulating/flame barrier sheet is applied to the lid of the housing.
Fig. 3 illustrates a schematic diagram showing a configuration of another embodiment of a lithium ion battery module.
Fig. 4 illustrates a structural schematic diagram showing an exemplary thermal insulating/flame barrier sheet used in the lithium ion battery module shown in Fig. 3.
Fig. 5 is a diagram for explaining the flame exposure test conducted in Example.
Fig. 6 is a diagram for explaining a method for measuring thermal conductivity in Example.
Fig. 7 is an electron micrograph image (magnification of 1000 times) of a cross section in the thickness direction of thermal insulating/flame barrier sheet No. 21 produced in Example.
Fig. 8 is an electron micrograph image (magnification of 1000 times) of a cross section in the thickness direction of thermal insulating/flame barrier sheet No. 23 produced in Example.
Fig. 9 is an electron micrograph image (magnification of 1000 times) of the heated surface of thermal insulating/flame barrier sheet No. 21 after conducting the flame exposure test.
Fig. 10 is an electron micrograph image (magnification of 1000 times) of the heated surface of thermal insulating/flame barrier sheet No. 23 after conducting the flame exposure test.
Fig. 11 is a diagram for explaining the thermal insulation test I conducted in Example.
Fig. 12 is a photograph of heated surface of the sheet after conducting the thermal insulation test I of the thermal insulating/flame barrier sheet No. 23 produced in Example.
Fig. 13 is a photograph of heated surface of the sheet after conducting the thermal insulation test I of the thermal insulating/flame barrier sheet No. 27 produced in Example.
Fig. 14 is a micrograph image (magnification of 100 times) of the heated surface of the thermal insulating/flame barrier sheet No. 23 after conducting the thermal insulation test I.
Fig. 15 is a micrograph image (magnification of 100 times) of the heated surface of the thermal insulating/flame barrier sheet No. 27 after conducting the thermal insulation test I.
Fig. 16 is a micrograph image (magnification of 100 times) of the back surface of thermal insulating/flame barrier sheet No. 23 after conducting the thermal insulation test I, the back surface being not exposed to flame during the thermal insulation test.
Fig. 17 is a micrograph image (magnification of 100 times) of the back surface of thermal insulating/flame barrier sheet No. 27 after conducting the thermal insulation test I, the back surface being not exposed to flame during the thermal insulation test.
Fig. 18 is a diagram for explaining the thermal insulation test II conducted in Example.
Fig. 19 is a graph showing change in temperature as the measurement results of the thermal insulation test II.

### EMBODIMENT FOR CARRYING OUT THE INVENTION

The thermal insulating/flame barrier sheet of the present invention is a paper-like sheet of inorganic fibers containing a silica-based inorganic fiber having a hydroxyl group; a glass fiber; a fibrous mineral; and a binder; and optionally, a certain amount of thermal insulating inorganic particles.

In particular, a paper-like sheet is a sheet with a thickness of less than 3 mm, preferably 2 mm or less, obtainable by papermaking process using a suspension containing a silica-based inorganic fiber having a hydroxyl group; a glass fiber; a fibrous mineral; a binder, and, if needed, a thermal insulating inorganic particle in a desirable proportion.

### <Composition of suspension for papermaking>

First, a suspension for papermaking which is made into a thermal insulating/flame barrier sheet of the present invention will be explained.

The suspension contains a silica-based inorganic fiber having a hydroxyl group; a glass fiber; a fibrous mineral; and a binder; and optionally, a certain amount of thermal insulating inorganic particle, in either water or an aqueous medium containing an organic solvent or a surfactant. Each component will be explained in detail below.

### (1) Silica-based inorganic fiber

The silica-based inorganic fiber used in the disclosure is an amorphous fiber containing SiO₂ as a fiber constituent and has a hydroxyl group at the terminal.

The hydroxyl group contained in the silica-based inorganic fiber undergoes a condensation reaction approximately between 300°C and 600°C as shown in the following formula (1) to form a siloxane bond (Si-O-Si bond) and generate H₂O. Water generated by the condensation reaction evaporates in a high temperature atmosphere. When evaporating, the silica-based inorganic fiber sheet consumes a given thermal energy for vaporization of the water, which may delay the temperature rise of the sheet.
[Formula 1]

Si(OSi)₃OH + HO·Si → Si(OSi)₄ + H₂O (1)

An exemplary silica-based inorganic fiber having a hydroxyl group is a silica-based amorphous fiber made from silicic acid modified with alumina and generally containing 90 to 97% by weight of silica, about 3 to 9% by weight of alumina, less than 0.5% of sodium oxide, and less than 0.5 % of other components (ZrO₂, TiO₂, Li₂O, K₂O, CaO, MgO, SrO, BaO, Y₂O₃, La₂O₃, Fe₂O₃, and mixtures thereof). Si(OH) exists in a part of the SiO- network. Such silica-based inorganic fiber has a melting point of 1500°C to 1550°C, and has a heat resistance of 1000°C or higher.

Further, such silica-based amorphous fiber does not substantially contain a non-fibrous particle (shot). The fiber free from the shot is excellent because the shot may deteriorate various properties of the fiber and cause variation in properties.

The composition of the silica-based inorganic fiber used in the disclosure is not particularly limited as long as the silica-based inorganic fiber can undergo the dehydration condensation reaction as described above. As the silica-based inorganic fiber, an unbaked BELCOTEX (registered trademark) from BELCHEM GmbH is available in market.

The unbaked BELCOTEX (registered trademark) has a hydroxyl group, which is a hydroxyl group generated by proton-substituting a metal or metal oxide ion (such as Al³⁺, TiO²⁺ or Ti⁴⁺, and ZrO²⁺ or Zr⁴⁺) contained in a starting glass material during the process of manufacturing a filament or staple fiber from the starting glass material.

The silica-based inorganic fiber used in the disclosure is a staple fiber with a diameter of 6 to 13 µm, preferably about 7 to 10 µm, and a length of 3 to 30 mm. Alternatively, a staple fiber having a diameter of about 6 to 13 µm, preferably about 7 to 10 µm, and a length of generally 1 to 50 mm, preferably 3 to 30 mm, more preferably 3 to 20 mm may be used.

The silica-based inorganic fiber is contained in a solid content of 25% by weight or more, 30% by weight or more, 40% by weight or more, and 70% by weight or less, 65% by weight or less, 50% by weight or less in the papermaking suspension. The content of the silica-based inorganic fiber may be appropriately selected from the range depending on the contents of the thermal insulating inorganic particle and the fibrous mineral.

The content of silica-based inorganic fiber in the thermal insulating/flame barrier sheet is almost the same as the solid content of the papermaking suspension.

Unduly small content of the silica-based inorganic fiber contained in the sheet may consume a small amount of thermal energy. This may not expect a sufficient mitigation of the temperature rise at an initial stage of thermal runaway. On the other hand, unduly high content of the silica-based inorganic fiber contained in the sheet may relatively reduce the contents of other components. This may lower the strength such as tensile strength, which results in impairing a handling property even if the problem concerning heat shrinkage could be solved by using a glass fiber as described later.

### (2) Glass fiber

A glass fiber contained in a sheet may enhance tensile strength of the sheet. This means that a shrinkage at high temperatures caused from the silica-based inorganic fiber may be suppressed. In other words, a glass fiber cannot keep its fibrous shape at high temperatures, especially when being exposed to flame, because it melts and shrinks. In addition, the glass fiber is not expected to exhibit insulating performance. However, in the case that the content of the glass fiber in the sheet is reduced, the glass fiber melt only intrudes into the gaps between the silica-based inorganic fibers and spreads like a film. This means that, in temperatures where the glass fiber begins to melt while silica-based fibers undergo dehydration condensation and shrink, the molten glass is trapped between the silica-based fibers, thereby preventing the molten glass from sagging. The molten glass trapped between the silica-based inorganic fibers may also offset the shrinkage of the silica-based fibers. Accordingly, even when the thermal insulating/flame barrier sheet is attached to a lid as an exemplary application shown in Fig. 2, the molten glass fiber does not sag.

The size of the glass fiber is approximately from 1 to 10 µm, preferably from 3 to 9 µm, more preferably from 4 to 6 µm in diameter. The glass fiber should have a length and durability sufficient enough to be entangled with the silica-based inorganic fiber and the organic fiber described later. Since a glass fiber is molten at a temperature as high as a temperature when exposed to flame, the molten glass fiber changes into a large glass drop and the glass drop will sag due to its own weight. Therefore, the glass fiber used may be preferably a staple fiber having a fiber length of 1 to 15 mm, preferably 2 to 10 mm.

The type of glass fiber used in the disclosure is not particularly limited. The glass fiber does not need high heat resistance based on its role in the sheet, so E glass fiber is preferably used from the viewpoint of availability and cost.

From the view of the role of the glass fiber, the content of glass fiber in the suspension used for papermaking is 2% by weight or more, 5% by weight or more, but 25% by weight or less, 20% by weight or less, 15% by weight or less, 10% by weight or less, less than 7% by weight.

The glass fiber content in the thermal insulating/flame barrier sheet is approximately the same as the solid content in the suspension for papermaking.

The content of glass fiber in the thermal insulating/flame barrier sheet is preferably selected from the range depending on the content of the silica-based inorganic fiber in view of the above-mentioned role of the glass fiber. Furthermore, the weight ratio of silica-based inorganic fiber to glass fiber is from 30:1 to 1.5:1, preferably 20:1 to 2:1, and more preferably about 10:1 to 3:1.

Unduly high content of the glass fiber tends to be difficult to secure an original sheet shape in a high temperature range (over 700°C) where glass melts or when exposed to flame.

### (3) Fibrous mineral

The fibrous mineral used in the invention is mineral consisting of fibrous, dendritic, acicular, columnar, or rod-like particle. The shape of the particle can be recognized by microscopic observation. Therefore, the fibrous mineral may sometimes be referred to as a clay mineral or a mineral fiber.

The aspect ratio of the fibrous mineral, length/width, is 10 or more, preferably 15 or more, and 200 or less, preferably 150 or less, wherein the length and width correspond to length and diameter of the fiber respectively.

A later-described thermal insulating inorganic particle has a poor thermal insulation performance at a high temperature (for example, 500°C or higher) where thermal runaway occurs, and may not be expected to have flame barrier performance either. While a clay mineral has excellent heat resistance and flame resistance. However, the clay increases the viscosity of the suspension, which may cause clogging in the papermaking process (particularly in the filtration and dewatering process using mesh). In this regard, a fibrous mineral is advantageous because of less prone to clogging.

From this viewpoint, the fibrous mineral has an average primary particle size of 5 µm or more, 10 µm or more, 20 µm or more, but 200 µm or less, 100 µm or less, 80 µm or less, 70 µm or less.

In the case of a curved or crimped fibrous mineral, a circular shape is hypothetically made based on the terminal length of the two-dimensionally projection of the curved or crimped fiber, the diameter of the circular shape may be employed as an average particle size. A desirable fibrous mineral may be obtained by classifying based on a maximum particle size using a sieve.

As the fibrous mineral, at least one selected from the group comprising sepiolite, palygorskite, potassium titanate whisker, and wollastonite is preferable.

Both of sepiolite and palygorskite are layered silicates classified into a clay mineral having a fibrous morphology. The width corresponding to the fiber diameter is less than 0.1 µm, and the length (fiber length) measurable by microscopic observation is about 150 µm at most.

Sepiolite is a hydrous magnesium silicate with a ribbon structure having a ratio of 2:1. Sepiolite is classified into α-type and β-type based on the difference in origin, and any type may be used. The α-type sepiolite has a longer length and a higher degree of crystallinity, due to exposure to hydrothermal action under the condition of high temperature and pressure. The β-type sepiolite is a short fiber like a massive or clay-like form, and has a relatively low degree of crystallinity due to its origin of sedimentation at the bottom of shallow sea or lake. In addition, the α-type can usually be confirmed as a fiber under an electron micrograph image (magnification of 1000 times), but the β-type has a granular shape under an electron micrograph image (magnification of 1000 times) and is usually difficult to recognize as a fibrous form.

The layered structure of sepiolite has a chain structure. Also, the sepiolite is porous and has a large specific surface area, and therefore has excellent adsorption property. Sepiolite having such properties may exhibit thixotropic property and may be pulverized into fibrous form in a slurry using water as a dispersion medium. In addition, since sepiolite is so plastic and flexible to intrude into a gap between fibers, the sepiolite can function as a binder between fibers after being dried and consolidated.

Wollastonite is metasilicate and an acicular crystal mineral with a length of about 50 µm and a width (fiber diameter) of 1 µm or less.

Potassium titanate is an acicular single crystal (whisker). A typical whisker has a fiber diameter of 0.1 to 0.5 µm and a length of 10 to 50 µm. A commonly available whisker has a length of 15 to 30 µm.

Such fibrous mineral particle can be entangled with silica-based inorganic fiber, and glass fiber in the suspension for papermaking. So even in the sheet produced by papermaking, the fibrous mineral is stably held and is less likely to fall off. Moreover, the fibrous mineral may contribute to reinforcing the sheet. In addition, fibrous mineral particles or entangled particles from each other are less likely to cause clogging during the filtration and dewatering process. So the fibrous mineral particle is excellent in handling during the papermaking process.

On the other hand, other mineral particles including a platy clay mineral such as mica and talc, rarely intertwine with fibers in a slurry state. Therefore, these mineral particles may slightly enhance the strength of the sheet, and the resulting sheet tends to have insufficient firmness and handling property.

Moreover, the fibrous mineral may enhance a tensile strength of a sheet under the condition of a high temperature, based on its high heat resistance. This is beneficial because a glass fiber contained in the sheet may not enhance the tensile strength of the sheet under the condition of a high temperature.

On the other hand, the insulation effect of these minerals tends to be inferior to that of the later-described thermal insulating inorganic particle or inorganic fiber. The increased content of the fibrous mineral relatively reduces the content of other components capable of providing thermal insulation performance. Therefore unduly large content of the fibrous mineral may lower the thermal insulation performance of the thermal insulating/flame barrier sheet.

For these reasons, the content of fibrous minerals in the thermal insulating/flame barrier sheet in the papermaking suspension is appropriately selected in the range of 5% by weight or more, 8% by weight or more, 10% by weight or more, 15% by weight or more, but 40% by weight or less, 35% by weight or less, 30% by weight or less, 20% by weight or less, depending on the content of other components.

### (4) Binder

As the binder, an organic binder and/or an inorganic binder may be used. The binder referred in the disclosure includes a compound capable of binding fibers to each other and binding a fiber to inorganic particle, and also include a general flocculating agent used in papermaking or molding involving removal of water.

The flocculating agent is a substance that can act like a crosslinking agent to promote the flocculation of fibers and particles contained in the suspension for papermaking. The flocculating agent enhances the yield in papermaking process.

### (4-1) Organic binder

The organic binder in various forms such as powder, granule, colloidal solution, high viscosity fluid, and fiber can be used.

Examples of the fibrous binder include a thermoplastic resin fiber. In the papermaking process, a thermoplastic resin fiber can act as a binder by intertwining with a high elastic glass fiber and/or silica-based inorganic fiber, further intertwining even with a thermal insulating inorganic particle.

In addition, the thermoplastic resin fiber can be softened and molten by heat during the drying process after papermaking, and can bind fibers. Binding fibers by heating and pressurizing in drying process may prevent the springback of glass fiber or silica-based inorganic fiber, thereby ensuring to obtain a sheet having an intended thickness.

The thermoplastic resin fiber includes pulp fiber, polyester fiber (softening temperature: about 240°C, melting temperature: about 255 to 260°C), polypropylene fiber (softening temperature: about 140 to 160°C, melting temperature: about 165 to 173°C), polyethylene fiber (softening temperature: about 100 to 115°C, melting temperature: about 125 to 135°C), acrylic fiber (softening temperature: about 190 to 240°C), polyvinyl chloride fiber (softening temperature: about 60 to 100°C, melting temperature: about 200 to 210°C), vinylidene fiber (softening temperature: 145 to 165°C, melting temperature: about 165 to 185°C), nylon fiber (softening temperature: about 180°C, melting temperature: about 215 to 220°C), vinylon fiber (softening point: 220 to 230°C), and polyvinyl alcohol fiber. A thermoplastic resin fiber having a core-sheath structure in which the core fiber is covered with a resin having a lower softening temperature may also be used.

A staple fiber of the thermoplastic resin fiber with a fiber diameter of 3 µm to 50 µm, preferably 5 µm to 30 µm, and a fiber length of 1 to 20 mm, preferably 3 to 10 mm are preferably used as the organic binder. Since the thermoplastic resin fibers need to be uniformly entangled with the inorganic fibers that form the main body of the thermal insulating/flame barrier sheet, a preferable thermoplastic resin fiber has a similar length to the inorganic fiber such as glass fiber and silica-based inorganic fiber.

Besides such a fibrous organic binder, powder or fluid of organic polymer, for example, latex such as acrylic latex and (meth)acrylic latex; powdery thickening substance such as polyvinyl alcohol powder and starch; a copolymer of styrene and butadiene, vinylpyridine, acrylonitrile, and a copolymer of acrylonitrile and styrene, may be used for the binder.

These organic binders may enhance the strength necessary for a wet sheet during papermaking process. The wet sheet is solidified after papermaking and after removal of the dispersion medium, however, it can be softened again by heating, which is advantageous for processing of a desirous modification such as slitting or folding.

The organic binder may soften and deform to be embedded in the gap between inorganic particles held by the inorganic fibers in a normal use as well as rise in temperature until the glass fiber is molten. This may allow the inorganic particles kept in a stable state.

Furthermore, a polymeric flocculating agent such as polyacrylamide, acrylamide-sodium acrylate copolymer, and sodium polyacrylate, which is included in the organic binder, may also be contained. In the wet papermaking method, particles smaller than the mesh openings pass through and cannot be filtered during dewatering process using the mesh. To address this, a polymeric flocculating agent is added to the fiber-containing liquid (papermaking suspension) to form flocs large enough to be separated from filtrate, thereby obtaining flocs to be molded. Considering the role of the polymeric flocculating agent, the agent used as an organic binder is preferably added to a fiber-containing liquid where fibers and particles are homogeneously mixed, or to a mixture of the fiber-containing liquid and a thermal insulating particle-containing slurry.

The above-mentioned organic binders can be used alone or in combination of two or more. When used in combination of two or more types, it may be a combination of organic binders differing in forms (for example, a combination of organic fiber and latex), as well as a combination of binders differing in their roles (for example, a combination of organic fibers and a polymeric flocculating agent).

The organic binders may be contained in a necessary and sufficient amount that a sheet obtained by papermaking tecnique may have flexibility to follow up the post-processing or thermal processing, or that the sheet may be suppressed in expansion and contraction of the sheet due to a variation in temperature in norm. Unduly high content of the organic fiber may decrease heat resistance of the sheet. Further, at high temperatures exceeding the temperature in norm, such as over about 200°C, the organic component may increase the temperature of the sheet due to exothermic reaction of oxidation of the organic component, or may be decomposed to generate a gas. These may cause risk to emit smoke, catch fire, or explode. For these reasons, the solid content in the papermaking suspension is 1% by weight or more, 3% by weight or more, 5% by weight or more, 10% by weight or less, and 8% by weight or less.

### (4-2) Inorganic binder

As the inorganic binder, colloidal oxides such as colloidal silica, alumina sol, and titania sol; water glass or calcium silicate; and aluminum sulfate being classified into a fixing agent or an inorganic flocculating agent, can be used.

Among these, colloidal silica particles may enter a gap between fibers and coagulate in the gap through by drying, thereby making a role as a binder for glass fibers and silica-based inorganic fibers.

Aluminum sulfate may improve water drainage and yield of fibers in wet papermaking process, and thus, aluminum sulfate is usually added as a fixing agent or a retention improver for papermaking processes.

The above inorganic binders may be used alone or in combination of two or more. The content of the inorganic binder in the suspension used for papermaking is approximately 1% by weight or more, 3% by weight or more, but 10% by weight or less, 7% by weight or less, and 5% by weight or less.

Either the organic binder or the inorganic binder, or both may be used. In the case of using the both in combination, the binder content in the papermaking suspension is from 3 to 20% by weight, preferably 5 to 15% by weight.

### (5) Thermal insulating inorganic particle

Examples of the thermal insulating inorganic particle used in the disclosure include a porous or hollow inorganic particle such as silica aerogel, glass bubble and glass balloon; nanoparticle forming an agglomerate capable of acting like a porous particle; ceramic particle scattering radiant heat, such as titanium oxide, alumina, and silica without a binder function (e.g., crystalline silica powder, amorphous silica, and fumed silica); and the like.

Among them, a hollow or porous silica particle and nanoparticles, which can exert thermal insulation and contribute to lightweight due to the presence of air, are preferred, porous silica particle such as silica aerogel is more preferred.

The silica particle used as a thermal insulating inorganic particle is an aggregate or agglomerate of nano sized particles (about 5 to 50 nm) and forms a net-like structure having nano sized pores with a porosity of 50% by volume or more. Such a silica particle is manufactured by a sol-gel method, a dry method (fumed silica), a wet method (precipitated silica), etc. The size and state of the aggregation or agglomeration are varied depending on the manufacturing method and manufacturing conditions.

Wet silica (precipitated silica) is generally synthesized in water using sodium silicate which is synthesized from silica sand, soda ash and mineral acids. They are obtained as an agglomerate (namely, cluster as a secondary particle) having a macropore structure with an indefinite shape, and can act like a porous particle.

A silica particle produced by the sol-gel method is an aggregate having a net-like structure by aggregating nano sized particles (approximately 5 to 50 nm) and linking them via silanol bonding. It corresponds to a porous particle as a primary particle having nano sized pores with a porosity of 70% by volume or more, preferably 80% by volume or more, more preferably 90% by volume or more.

A preferable silica particle is a hydrophobic aerogel having nano sized pores which provide a long and winding air path. Such aerogel can exhibit thermal and electric insulation based on the air path.

Hereinafter, a hydrophilized aerogel particle and an agglomerate of nanoparticles with a hydrophilic surface will be described as a representative of the thermal insulating inorganic particle.

### (5-1) Hydrophilized aerogel particle

A sol-gel method yields a porous silica aerogel. Specifically, a sol containing at least a tetrafunctional silane compound in addition to a bifunctional silane and a trifunctional silane is subjected to a crosslinking reaction to form a gel. The obtained wet gel is dried to obtain the porous silica aerogel. During the drying process, the water and/or organic solvent on the surface and inside of the wet gel is removed, or replaced with an organic solvent (solvent exchange). If necessary, the wet gel is shaped before the drying process. Regarding the drying technique, supercritical drying or normal pressure drying may be appropriately chosen based on the type of organic solvent.

Thus, produced dry gel or aerogel has a pore size of about 1 to 20 nm, which is smaller than the mean free path of a gas molecule.

The silica aerogel produced by the sol-gel method has a silanol group on the surface. The silanol group is end-capped with a hydrophobic group using a silylating agent and the like, and an aerogel particle having a hydrophobic surface is produced. An individual silica particle contained in the aggregate has a hydrophobic surface, and hydrophobic inside of its individual pore. The hydrophobic aerogel prevents water from entering the pores, even in a slurry whose dispersion medium is water. As a result, the pores remain filled with air, which reduces thermal conductivity.

The aerogel particle having a hydrophobic surface usually has a contact angle with respect to water of 100 degrees or more, 110 degrees or more, 130 degrees or more, or 150 degrees or more.

An aerogel particle having a hydrophobic surface is preferably used as a thermal insulating inorganic particle in the disclosure. Specifically, a silica aerogel having a porous structure with a surface area of about 300 m²/g to about 1000 m²/g, preferably 500 m²/g to about 1000 m²/g, 700 m²/g to 800 m²/g, according to BET, and a porosity of at least 80%, preferably 85% or more, more preferably 90% or more is used.

The hydrophobic aerogel particle used as the thermal insulating inorganic particle commonly has an average particle size of 5 to 200 µm, preferably 5 to 150 µm, and more preferably 10 to 100 µm. The particle density is preferably from 100 to 200 g/cm³.

Use of the aerogel particle having the above-mentioned size may improve the yield in the production of the thermal insulating/flame barrier sheet by papermaking process, and provide a lightweight thermal insulating/flame barrier sheet with excellent thermal insulation properties.

There is a case that an aggregate having a size of 200 µm or more to a couple of millimeters may be produced in a certain manufacturing method. In this case, such aggregate undergoes pulverization to obtain an aerogel particle having the above-mentioned size.

If an individual aerogel particle in the inorganic powder has a hydrophobic surface and high surface tension, the particles cluster together in a papermaking suspension. As a result, it becomes difficult for the aerogel to mix evenly with other components, such as inorganic fiber and thermoplastic resin fiber in the slurry. In the disclosure, this problem is resolved by hydrophilizing the hydrophobic silica aerogel.

Examples of methods for hydrophilizing the hydrophobic aerogel include a method of mixing the hydrophobic aerogel with an organic solvent or surfactant to change the hydrophobic surface into miscible one with water; a method of covering all or part of the surface of the hydrophobic aerogel particle with a hydrophilic polymer which does not penetrate pores of the particle.

The organic solvent or surfactant used for hydrophilization is a solvent or surfactant capable of existing at the interface between water and silica aerogel but not affecting an aggregate as the silica aerogel particle. Moreover, the solvent is miscible with fibers in water.

Specific examples include polyhydric alcohol alkyl ether-based organic solvents having from about 3 to 7 carbon atoms, such as ethylene glycol monoethyl ether, ethylene glycol dimethyl ether, propylene glycol monomethyl ether, and diethylene glycol monomethyl ether.

In this regard, an alkylene oxide type surfactant such as polyoxyethylene, polyoxypropylene, and polyoxyethylene/polyoxypropylene condensates may enhance hydrophilicity of aerogel, however, the hydrophilized aerogel tends to separate from a fiber-containing liquid phase where water is used as a solvent. This means aerogel particles may not be homogenously mixed with fibers.

When the above organic solvent or surfactant is contained, the content in the aerogel slurry described later is preferably 10% by weight or less. Unduly high content of the surfactant or organic solvent may cause foaming during the preparation of the papermaking slurry, especially during mixing and stirring process.

Examples of the hydrophilic polymer used for hydrophilizing treatment include polysaccharides such as cellulose nanofibers, starch, amylose, cationized starch, and carboxymethylcellulose; vinyl-based hydrophilic polymers such as polyvinyl alcohol, polyvinyl acetate, ethylene-vinyl alcohol-based resin, and polyacrylic acid. Among these, water-soluble polymers are preferred, and water-soluble polymers having a plurality of primary or secondary hydroxyl groups are more preferred. Further, in the case of a saponified product such as polyvinyl alcohol, the saponification degree is preferably from 77 to 99 mol% from the viewpoint of water solubility.

For the polyvinyl alcohol, not only unmodified polyvinyl alcohol, but also modified polyvinyl alcohol with multiple alcoholic hydroxyl groups in the side chain or with oxyalkylene groups, sulfonic acid groups, and so on in the side chain, may be used, as far as water solubility and hydrophilicity of polyvinyl alcohol are not impaired by modification.

These hydrophilic polymers are used in the form of an aqueous solution. They act as a thickener, increasing the solution's viscosity. A highly viscous aqueous solution may evenly cover the aerogel particles by stirring and shaking, resulting in aerogel particles with a hydrophilic surface.

A typical hydrophilic polymer has relatively long chain as compared to pore size of the aerogel, and has plurality of hydrophilic functional groups. Based on such molecular structure, the hydrophilic polymer would enclose the aggregate of the aerogel particle, while the hydrophilic functional groups face the solvent as a diispersion medium. Thus hydrophilized aerogel particle may have a provisional surface miscible with the medium of the aerogel-containing slurry. This allows the aerogel particle in a form of aggregate to disperse in the solvent of the slurry.

The hydrophilic polymer may be used in an amount necessary and sufficient to create the provisional hydrophilic surface covering the aggregate of the hydrophobic aerogel particle. A common amount of the hydrophilic polymer used for the purpose is in the range of 1/2 to 1/100, in terms of the ratio in weight of the hydrophilic polymer to hydrophobic aerogel particles. The amount may be appropriately selected within this range depending on the types of hydrophilic polymer and hydrophobic aerogel particle.

Among the above-mentioned hydrophilizing methods, a method using a water-soluble polymer is preferable because it is environmentally friendly, easy to handle, and better for the manufacturing environment. In this method, water may be used alone as a dispersion medium for both the fiber-containing liquid and the papermaking suspension. This can simplify wastewater treatment during the dewatering process.

A surfactant or a hydrophilic polymer suitable for hydrophilizing aerogel particles can also serve as an organic binder or an emulsifier in the papermaking process. However, they differ in handling during the preparation of the papermaking suspension. When used as a binder or emulsifier, the surfactant or hydrophilic polymer are typically added to the fiber-containing liquid, followed by the simultaneous and gradual addition of the aerogel. This often causes the aerogel to separate from the water phase (which contains the surfactant or hydrophilic polymer) due to significant difference in specific gravity.

When using the water-soluble polyemer as a hydrophilizing agent for aerogel, issues related to specific gravity differences do not arise. This is because the slurry containing the aerogel and the hydrophilic polymer, and a fiber-containing liquid, are prepared separately, and then mixed. In this case, the hydrophilic polymer may cover the aerogel particle, and helps the aerogel particle disperse in the fiber-containing liquid, resulting in a dispersion where the aerogel particles are evenly distributed throughout the fiber-containing liquid phase.

### (5-2) Hydrophilic silica nanoparticles

The hydrophilic silica nanoparticle used in the disclosure is commonly a wet silica or precipitated silica, which is synthesized in water from raw materials including mineral acid, and sodium silicate synthesized from silica sand and soda ash. The hydrophilic silica nanoparticles cluster and form a block with an indefinite shape, namely amorphous agglomerate, before mixing with fiber-containing liquid. The block of nanoparticles has a macropore structure and may act as a porous particle.

Using the cluster of hydrophilic silica nanoparticles for a thermal insulating inorganic particle does not require a specific surface treatment.

Regarding the hydrophilic aerogel particle consisting of silica nanoparticles, the silica nanoparticle has a hydrophilic surface and has a primary average particle size of about 1 to 50 nm, particularly about 5 to 30 nm. The hydrophilic aerogel particle consisting of silica nanoparticles is an agglomerate (cluster as a secondary particle) having a particle size of about 100 nm to 100 µm. As nanoparticles in the agglomerate do not bond each other, the agglomerate can be crumbled into nanoparticles which may disperse easily in water, and the nanoparticles are miscible with inorganic fibers such as silica-based inorganic fiber and glass fiber during the preparation of the papermaking suspension. As a result, a suspension where hydrophilic silica nanoparticles are entangled with inorganic fibers are readily obtained.

On the other hand, as the silica nanoparticles in the agglomerate are not bonded each other, the agglomerate may be crumbled into individual nanoparticles by a mixing operation such as stirring. If nanoparticles or its agglomerate are insufficiently entangled with an inorganic fiber, binder, and/or fibrous mineral, some individual nanoparticles may flow out along with water during the papermaking process due to downsizing to a smaller size than the opening of the mesh used in the dewatering process. As a result, the yield in the papermaking process tends to be reduced.

### (5-3) Content of thermal insulating inorganic particle

The thermal insulating inorganic particle is not essential but is preferably contained in the thermal insulating/flame barrier sheet of the disclosure. In a normal condition where the atmospheric temperature is increased up to at most 200°C, a hydrophilized silica aerogel particle can enhance a thermal insulation performance. If a certain cell among a number of cells stacked within a battery pack or battery module becomes overheated, the transferring heat energy to adjacent battery cells or battery modules may be mitigated by the silica aerogel. Furthermore, silica aerogel as a porous particle contributes to lightening the thermal insulating/flame barrier sheet.

On the other hand, hydrophilized silica aerogel as a thermal insulating inorganic particle may impart a thermal insulating performance based on the low thermal conductivity of air pocket, however, it may not contribute to a notable thermal insulation performance at high temperatures (approximately 1000°C) where thermal runaway may occur. Silica-based inorganic fiber and fibrous mineral both having a heat resistance of 1000°C or higher exhibit flame barrier and heat resistance at the high temperatures. Therefore, in order to achieve the thermal insulation and flame barrier in a high temperature range covering the both situations of thermal runaway and a normal use, the content of thermal insulating inorganic particles is 0% by weight or more, 5% by weight or more, 10% by weight or more, 15% by weight or more, 20% by weight or more, 25% by weight or more, 30% by weight or more, 35% by weight or more, and 45% by weight or less, and 40% by weight or less. If the content exceeds more than half of the sheet material, papermaking becomes difficult, and the thermal insulating/flame barrier sheet may not have sufficient heat resistance and flame barrier properties at high temperatures under thermal runaway.

### (6) Thermosetting resin precursor

The thermal insulating/flame barrier sheet of the invention may optionally contain a thermosetting resin precursor. The thermosetting resin precursor is a monomer or oligomer of a thermosetting resin such as phenol resin (for example, resol resin), polyimide resin, melamine resin, diallyl phthalate resin, etc. The thermosetting resin precursor is in liquid or powder form.

The thermosetting resin precursor may be cured by a crosslinking reaction by heating or in the presence of a curing agent.

In the case of imparting an intended shape to a thermal insulating/flame barrier sheet, or improving a sheet's strength by laminating a thermosetting resin layer thereon, a thermosetting resin precursor is preferably added to a papermaking suspension containing inorganic fibers (silica fiber, glass fiber), organic and/or inorganic binders, and inorganic particle (fibrous mineral, thermal insulating inorganic particle) to prepare a sheet. The resulting sheet containing the thermosetting resin precursor may at least partially adhere to the laminated thermosetting resin layer through crosslinking reaction between them in the process of thermosetting, thereby enhancing the interlayer adhesion in the laminate.

The thermosetting resin precursor may be contained in a content of less than 5% by weight, preferably 1 to 3% by weight. The more the content, the bigger the adhesive strength to the thermosetting resin layer in the laminate, while the flexibility of a resulting inorganic fiber-based thermal insulating/flame barrier sheet may not be secured due to the sheet material mainly comprising inorganic fibers.

### (7) Other fillers

In addition to the above-mentioned solid components, another solid filler may be contained in the papermaking suspension, in an amount of less than 10% by weight, preferably less than 5% by weight, more preferably 3% by weight or less based on the total solid content.

The other filler may include a clay mineral (layered silicate) other than the said fibrous mineral. For example, a hydrous ferrosilicate mineral such as mica, kaolinite, smectite, montmorillonite, sericite, illite, glauconite, chlorite, and talc, or a mixture thereof may be contained. Among these, smectite, montmorillonite, bentonite, and a mixture thereof are preferably used.

Bentonite is a natural clay mineral whose main component is montmorillonite. Smectite is a general term for a group of 2:1 type mineral, which includes montmorillonite, stevensite, hectorite and so on.

A crystal unit crystal of montmorillonite is a flat unit consisting of a tetrahedral sheet, an octahedral sheet, or a tetrahedral sheet. A plurality of such crystal unit cells are stacked to form a layered structure. Smectite as well as sepiolite can enter the inter-fiber spaces in papermaking suspension based on the crystal unit of montmorillonite which is a very thin plate crystal with a thickness of about 1 nm and a width of 100 to 1000 nm. After drying the suspension, the solidified smectite can exist like a film in the inter-fiber spaces, thereby functioning as a binder for the fibers.

Montmorillonite has a high liquid limit and can absorb a relatively large amount of water. Smectite has a swelling property that expands when water or organic solvent enters between the layers, and can absorb a large amount of water (for example, 10 times more water than kaolin) between the layers. Furthermore, montmorillonite is readily peptized in the presence of electrolytes. Therefore, the montmorillonite may exhibit high film formability by using together with sepiolite, and may form a film in the gap between fibers with inorganic particles involved.

The layered silicate used for the papermaking suspension is present in a state of powder with an average particle size of 300 µm or less, preferably 200 µm or less, and more preferably 10 to 100 µm in equivalent circle diameter. This powder of the layered silicate is mixed with water to become viscous, sticky, and plastic, and can spontaneously form a film. During papermaking and drying, a clay may coagulate and solidify while inorganic particles such as inorganic binder and thermal insulating inorganic particle are trapped in the inter-fiber spaces. As the layered silicate (clay) can act as a binder for inorganic fibers and enhance the cohesive force of the inorganic fibers and inorganic particles, the inorganic fibers and inorganic particles may be stably held in the resulting paper.

Another examples of the other solid filler include neutralizer, lubricant, antiblocking agent, fluidity improver, mold release agent, flame retardant, colorant, wetting agent, sticky agent, retention agent, paper strength agent, filtering agent, pH adjuster, and the like.

### (8) Dispersion medium

Any dispersion medium used for papermaking suspension may be applicable as long as the silica-based inorganic fiber, glass fiber, fibrous mineral, inorganic particle, and organic fiber may be uniformly dissolved or dispersed in the medium.

Examples of the dispersion medium include aromatic hydrocarbons such as toluene, ethers such as tetrahydrofuran, ketones such as methyl ethyl ketone, alcohols such as isopropyl alcohol, N-methyl-2-pyrrolidone (NMP), dimethylacetamide, dimethylformamide, dimethylsulfoxide, water and mixture of one or two or more of these.

In addition to water, an organic solvent may be blended if needed for improving particle dispersibility, but water alone is preferred because of environmentally friendly and simplification of wastewater treatment. The content of the surfactant and organic solvent is 0.1% by weight or less, preferably 0.01% or less, more preferably 0.001% by weight or less.

Even when aerogel particle hydrophilized with an organic solvent or a surfactant is used as the thermal insulating inorganic particle, the papermaking suspension can be kept within the above range.

### <Preparation of papermaking suspension>

Each of the components listed above, namely silica-based inorganic fiber, glass fiber, fibrous mineral, and binder, and an optional component such as a thermal insulating inorganic particle, thermosetting resin and other filler, are added to the dispersion medium in a desirable amount, stirred, to obtain a papermaking suspension. In a preparation of a papermaking suspension, if desirable, water may be added for dilution.

The solid content in the papermaking suspension may be selected to achieve a homogenous mixture of the components. Specifically, the solid content is from 0.01 to 10% by weight, preferably 0.05 to 3% by weight.

The order of the components in the blending process is not particularly specified. The fibers and inorganic particles are preferably added to the dispersion medium while stirring the suspension.

When using a hydrophobic material such as hydrophobic silica aerogel, as a thermal insulating inorganic particle, it is preferable to prepare a slurry containing a hydrophilized silica aerogel beforehand. The aerogel slurry is mixed with a fiber-containing liquid which is prepared separately, followed by adding a binder to the mixed suspension.

Even when using a hydrophobic aerogel as a thermal insulating inorganic particle which is likely to separate from water phase containing fibers, the aerogel after hydrophilizing treatment may be entangled with the fibers in water phase, resulting in obtaining a sheet where the hydrophobic aerogel is dispersed within the fibers.

### <Wet papermaking>

Wet papermaking, which is a manufacturing process of sheet or paper, is conducted by making a paper from a suspension with a paper machine, removing water by pressing and drying.

As the paper machine, a cylinder paper machine, a fourdrinier paper machine, an inclined paper machine, an inclined short wire machine, and a combination of these may be used.

The dispersion medium is removed from the obtained wet sheet by heating and drying. The drying temperature is a temperature capable of evaporating the dispersion medium (water, and optionally containing organic solvent), preferably at least 80°C. A preferable upper limit of the drying temperature is lower than the temperature initiating thermosetting in the case of containing a thermosetting resin precursor, and below a melting point in the case of containing a thermoplastic fiber. Therefore, the heating and drying process may be conducted at a temperature chosen from the range of 60 to 200°C, preferably 80 to 150°C, depending on the type of thermoplastic resin fiber used and the presence or absence of a thermosetting resin precursor.

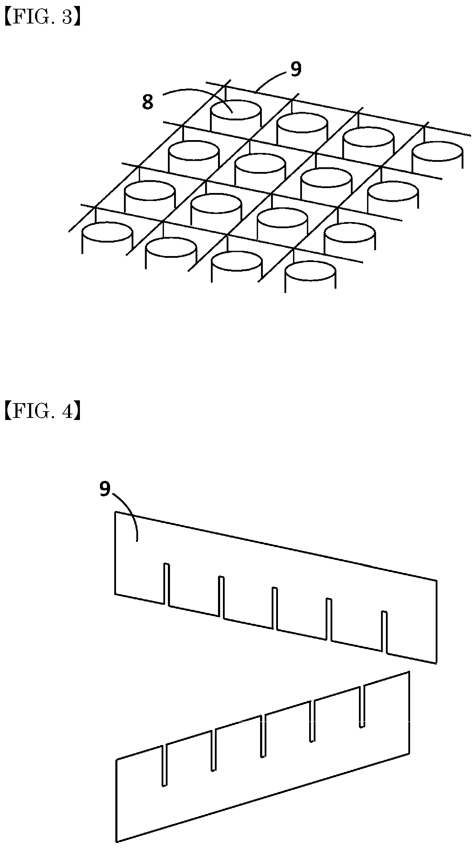

After papermaking, before drying, during drying, or after drying, the thermal insulating/flame barrier sheet may be shaped into a desired shape. Drying may be performed by heating alone or by heating under pressure. When used as a separator sheet for a battery module shown in Fig. 3, the processes of pressurization and drying may be conducted after shaping process such as slitting shown in Fig. 4.

A wet sheet having plasticity may be made into a sheet having a slit or a folded sheet before drying, and thereafter may be solidified.

After drying, a shaped sheet like a paper may be further subjected to a secondary processing such as cutting, punching, and folding.

Besides the above method, there is another method known as an external addition. In the external addition, a liquid containing a fiber, thermal insulating inorganic particle, fibrous mineral, and a binder is coated on a sheet with a spray, curtain coater, impregnating coater, bar coater, roll, blade or the like, for the purpose of impregnating them in the sheet. However, a certain amount of the fibrous mineral and inorganic particle tend to remain on the surface of the sheet, and they become powdery in the dry sheet, resulting in their scattering. According to the invention, since a sheet is manufactured by papermaking process, the fibrous mineral and the thermal insulating inorganic particle can be held in the resulting sheet by inorganic fibers as a main component. The inorganic particle and fibrous mineral are entangled with fibers or fibrous mineral. This may enhance their retention in the sheet, and powdery particle generated after drying may be prevented from scattering. In other words, the inorganic particles are stably held within the sheet.

### <Configuration of thermal insulating/flame barrier sheet>

According to the invention, a papermaking suspension having the above-mentioned composition is made into a wet sheet by wet papermaking technique, followed by drying for removal of the dispersion medium, thus the thermal insulating/flame barrier sheet is obtained.

In the case of obtaining a sheet 9 with a plurality of slits shown in Fig. 4, the wet sheet is dried with use of a mold having convex portions for creating the slits. The thermal insulating/flame barrier sheet of the disclosure has a strength and flexibility necessary for undergoing the drying process with the mold.

The thickness of the sheet is more than 0.5 mm, 0.8 mm or more, 1 mm or more, 1.3 mm or more, 1.5 mm or more, and less than 3 mm, 2.5 mm or less, 2.0 mm or less, and 1.8 mm or less. An excessively thin sheet has a reduced strength. Additionally, unduly thin sheet may not have a satisfactory thermal insulation performance due to a lowered contents of fibers and thermal insulating inorganic particle.

However, a fibrous mineral can improve the strength of sheet with a thickness below 3 mm. Furthermore, the thermoplastic resin fibers in the sheet may become plastic and softened when heated, potentially improving the sheet's durability during the compression process. Further, since the thermal insulating inorganic particles may be held by entangled fibers, scattering of the inorganic particle powder may be suppressed even in the cutting or punching process.

According to the invention, a thermal insulating/flame barrier sheet thus produced by papermaking technique may be used alone or in a laminate with a release paper. The release paper may be laminated on one side of the sheet with an adhesive. As shown in Fig. 2, in the case that the thermal insulating/flame barrier sheet is adhered to the lid 12'a of a battery module housing 12', an adhesive is applied on one side of the thermal insulating/flame barrier sheet 10 to form an adhesive layer 10a, followed by laminating a release paper on the adhesive layer 10a. The release paper is released from the thermal insulating/flame barrier sheet 10 and subsequently the sheet 10 is attached to the lid 12'a via the adhesive layer 10a. The work of applying the thermal insulating/flame barrier sheet to the battery module housing may be facilitated.

The thermal insulating/flame barrier sheet of the disclosure having the above-mentioned configuration is excellent in thermal insulation performance in a high temperature range compared to a sheet obtained by adding a binder to silica-based inorganic fibers in papermaking process. Due to the presence of thermal insulating inorganic particle, the thermal insulating/flame barrier sheet may also exhibit excellent performance in a normal use (below 300°C where thermal runaway does not occur).

The bulk density of the thermal insulating/flame barrier sheet may be reduced to 400 kg/m³ or less, 300 kg/m³ or less, 250 kg/m³ or less, 100 kg/m³ or more, or 150 kg/m³ or more, depending on the basis weight of the sheet. Therefore, the thermal insulating/flame barrier sheet of the disclosure is notably light as compared with a mica sheet that has a common bulk density is about 2000 kg/m³. Light weight of thermal insulating/flame barrier sheet is advantageous because the sheet is interposed each between cells in a battery pack and/or module, and a large number of cells are stacked in the battery pack and modules used as a power of an EV vehicle shown in Fig. 2.

In case that one of the cells undergoes thermal runaway for a certain reason, the cell's temperature escalates up to a high-temperature region where a thermal insulation by aerogel may not be expected. The consumption of the silica-based inorganic fiber through the dehydration condensation reaction may suppress a temperature rise in an initial stage of thermal runaway, and moreover the temperature rise may be mitigated due to the low thermal conductivity of the silica-based inorganic fiber. This effect of the silica-based inorganic fiber may delay the spread of thermal runaway event to adjacent cells, which is useful.

Moreover, the silica-based inorganic fiber may contribute to a shape retention of the sheet in a high temperature range of 600 to 800°C, where the glass fiber is decreased in its strength and becomes difficult in retention of its fibrous shape. This effect of the silica-based inorganic fiber is derived from its excellent heat resistance which is higher than that of glass fiber. In addition, the fibrous mineral can act as a flame barrier when exposed to flame.

Accordingly, the thermal insulating/flame barrier sheet of the disclosure can perform a thermal insulation over a wide range of temperatures from its normal use of up to about 200°C, and as high as 1000°C, for example, during a rapid temperature escalation caused from thermal runaway of one cell, under the thermal runaway propagation (about 600 to 800°C), and under the condition of exposure to flame near 1000°C, with almost no changes in its original sheet shape. Thus, the thermal insulating/flame barrier sheet of the disclosure can delay heating to adjacent cells as well as penetration of flame.

Furthermore, a thermal insulating/flame barrier sheet containing a porous particle as a thermal insulating inorganic particle has excellent durability to change of volume caused from the volume fluctuation of the lithium ion battery. The lithium ion battery experiences the volume fluctuation such as expanding and contracting due to hot or cold temperature even in norm. Therefore, as shown in Fig. 2, in a cells-stacked battery pack, especially in a battery module in which cells 11' are stacked closely together in a housing 12', a thermal insulating/flame barrier sheet containing a porous particle as a thermal insulating inorganic particle may play a role as a buffer against fluctuation in cell volume.

### <Purpose>

The thermal insulating/flame barrier sheet of the disclosure may be used for the following purposes. A thermal insulating/flame barrier sheet interposed between battery cells, which is a smallest unit of a lithium ion battery (depicted in Fig. 1); when packaging a battery consisting of a plurality of lithium ion cells electrically connected in series or parallel are arranged in a battery housing with a certain space outside of the housing, the thermal insulating/flame barrier sheet is placed between the battery and the lid of the housing for insulation for the lid (Fig. 2); the thermal insulating/flame barrier sheet is used as a partition wall or a separator sheet of the aligned cylindrical cells as depicted in Fig. 3.

If a cell or module undergoes "thermal runaway", the electrolyte contained within the battery ignites, in worse scenario, the battery might explode or fire. Placing the thermal insulating/flame barrier sheet of the disclosure between the individual battery cells in a battery pack or a battery module, or a space between the battery pack and the housing enclosing the battery pack, may prevent spreading of the thermal runaway. In other words, the thermal insulating/flame barrier sheet can prevent a propagation of thermal runaway event of a battery cell to adjacent battery cells and further to other batteries in the battery module.

### EXAMPLES

### [Measurement and evaluation method]

### (1) Flame exposure test

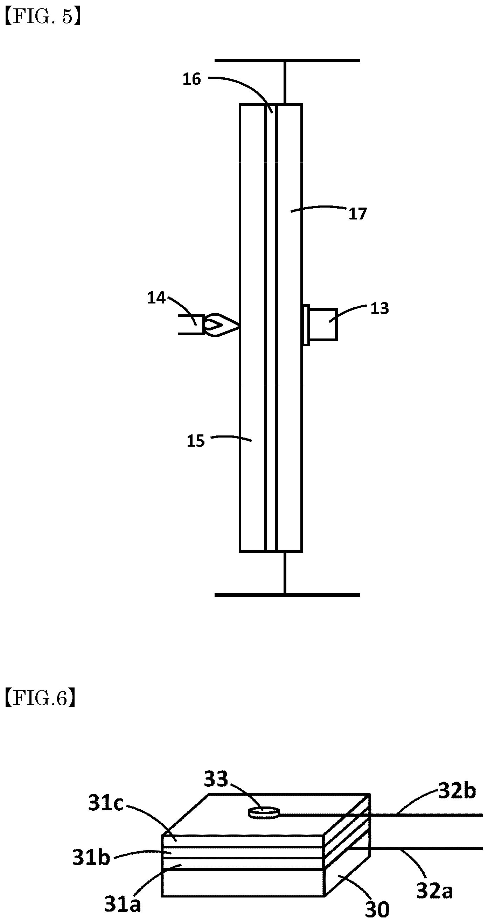

A sheet (150 mm × 150 mm) 15 to be evaluated was fixed to a steel plate 17 having an electro-deposit of cationic paint, which is regarded as the battery cell box, as shown in Fig. 5. The fixation is done by use of an adhesive tape 16. The sheet 15 was heated by the flame of a burner 14 fixed horizontally. The flame of the burner was positioned 5 mm apart from the surface of the sheet 15, and the flame's temperature was adjusted to 1000°C. The temperature (back surface temperature) of the steel plate 17 was measured using the temperature sensor 13, which was placed on the back surface of the sheet. This surface was not directly exposed to the flame.

After heating for 10 minutes or 5 minutes with the burner, the state of the sheet was observed for the presence or absence of crack, sheet appearance and the like.

### (2) Measurement of thermal conductivity by a heat flux technique

The three sheets prepared in Example, labelled 31a, 31b, and 31c as shown in Fig. 6 were placed in sequence and laminated on the heater 30. A thermocouple 32a is placed between the heater 30 and the bottom sheet 31a, and another thermocouple 32b is positioned on top of sheet 31c, and a heat flow sensor 33 (K500B-20, manufactured by Kyoto Electronics Manufacturing Co., Ltd.) was added on the thermocouple 32b. The difference in temperature between the bottom surface of the bottom layer sheet 31a and the top surface of the top layer sheet 31c was measured with the thermocouples 32a and 32b respectively, and the heat flux was measured with the heat flow sensor 33. The thermal conductivity (λ) was calculated from these measurement results.

In the calculation of the thermal conductivity (λ), the value of the temperature measured regarding the sheet which was kept for 6 hours heated at 200°C using the heater 30 in order that the entire sheet was uniformly heated.

### [Raw materials for thermal insulating/flame barrier sheet]

### <Raw materials>

### (1) Silica-based inorganic fiber

Chopped strand (fiber diameter of 9 µm, fiber length of 3 to 5 mm) of BELCOTEX (registered trademark) 110 (composition: ALO_{1.5} · 18 [(SiO₂)_{0.6} (SiO_{1.5}OH)_{0.4}]) from BELCHEM GmbH was used with/without heat treatment: one was used after its heat treatment at 300°C for 1 hour (baked silica-based inorganic fiber), and another was used without heat treatment (unbaked silica-based inorganic fiber).

### (2) Fibrous mineral

### ·Sepiolite

Two types of sepiolite, α-type and β-type, were used.

The α-type sepiolite used was a powder having a bulk density of 0.13 to 0.15 g/ml, and 40% of the powder having a particle size of 150 µm or less.

The β-type sepiolite used was a powder having a bulk density of 0.20 to 0.27 g/ml, and 80% of the powder having a particle size of 45 µm or less.

### · Potassium titanate

Tismo manufactured by Otsuka Chemical Co., Ltd., which is potassium titanate (whisker) having a fiber diameter of 0.3 to 0.6 µm and a fiber length of 10 to 20 µm, was used.

### (3) Glass fiber

Glass fiber (E-glass) with a diameter of 5 to 9 µm and a length of 3 to 9 mm was used.

### (4) Organic binder

· Pulp fiber (fiber diameter of 20 to 30µm)
· Polyester fiber (fiber diameter of 5 to 10µm, fiber length of 3 to 9mm)
· Polyvinyl alcohol fiber (fiber diameter of 5 to 12µm, fiber length of 3 to 6mm)
· Acrylic latex

### (5) Inorganic binder

· Aluminum sulfate
· Colloidal silica

SNOWTEX 30 (registered trademark) was used. SNOWTEX 30 is a colloidal solution where a silica nanoparticle (amorphous) having a specific surface area of 130 to 280 m²/g is distributed as an individual particle with an average primary particle diameter of 10 to 20 nm.

### (6) Thermal insulating inorganic particle

The following two types of thermal insulating inorganic particles were used.

### (6-1) Hydrophobic aerogel

Amorphous silica produced by a sol-gel method was hydrophobic aerogel having a surface's contact angle of 120 to 150 degrees, surface area of 700 to 800m²/g, porosity of 120 to 150kg/m³, average pore diameter of 20nm, particle size ranging from 30 to 120µm, and DBP oil absorption of 540 to 650 g/100 g. The hydrophobic aerogel was subjected to the following hydrophilizing treatment I, II, or III. The respective hydrophilized aerogel was used as a thermal insulating inorganic particle I, II, or III.

### · Thermal insulating inorganic particle I

The above-mentioned hydrophobic aerogel 20 g and an organic solvent (ethylene glycol monobutyl ether) 20 g were added to 200 g of water, mixed and shaken to obtain an aerogel slurry. In the hydrophilizing treatment, the organic solvent was used at a ratio aerogel : organic solvent = 1:1. The resulting hydrophilized aerogel slurry had an aerogel solid content of 8.3%.

### · Thermal insulating inorganic particle II

The above-mentioned hydrophobic aerogel 20 g, an aqueous solution having a concentration of 2.3% cellulose nanofiber 20 g, and an organic solvent (ethylene glycol monobutyl ether) 20 g were added to 200 g of water, mixed and shaken to obtain an aerogel slurry. In the hydrophilizing treatment, the cellulose nanofiber was used at a ratio aerogel : cellulose nanofiber = 43 :1. The resulting hydrophilized aerogel slurry had an aerogel solid content of 8.6%.

### · Thermal insulating inorganic particle III

The above-mentioned hydrophobic aerogel 30 g and polyvinyl alcohol 5 g were added to 300 g of water to obtain an aerogel slurry. In the hydrophilizing treatment, the polyvinyl alcohol was used at a ratio aerogel: polyvinyl alcohol = 6:1. The resulting slurry has an aerogel solid content of 8.9%.

### (6-2) Hydrophilic silica particles (wet silica)

Regarding a thermal insulating inorganic particle IV, amorphous precipitated silica which consists of hydrophilic silica nanoparticles and has a large number of silanol groups on the surface, was used. This hydrophilic silica nanoparticles each having a couple of nanometers of average primary particle diameter formed an agglomerate with an indefinite shape as a secondary particle having a diameter of 1 to 10 µm. The agglomerate had a specific surface area of 200 to 250 m²/g, and the DOA oil absorption amount of 230 to 280 ml/100 g.

### (7) Others

### · Mica (Yamaguchi Mica AB-25S)

### Wet milled product

Average particle size of 24µm, and bulk specific gravity of 0.17g/ml
· Kaolinite (Kaolin for research experiment grade available from Hayashi Pure Chemical Ind., Ltd.)

### <Preparation of papermaking suspension and production of sheets No. 1 to 7 by papermaking technique, each sheet not containing thermal insulating inorganic particle>

In a container containing 2000 cc of water, the above-mentioned raw material components were blended at the ratio (% by weight of solid content) shown in Table 1, furthermore, 2 cc of polyacrylamide as a flocculating agent was admixed, and subsequently stirred using a mixer, to form a sheet using a handcomb.

Thus obtained wet sheet was placed in an oven and dried at 100°C for 10 minutes. A resulting square sheet having a length of 150 mm and a thickness of 1.5 mm was supplied for measurements.

The flame exposure test (exposure time: 10 minutes) was conducted on the sheet. One side was exposed to the flame, while the temperature of the back surface which was not directly exposed to the flame was measured. The measurement value was mathematically converted to the value of the sheet having a thickness of 1.6 mm, and the converted value was employed as the thermal insulation of the sheet. Moreover, the appearance of the sheet after the test was visually observed. These results are shown in Table 1.

A mica sheet (commercial product) as a reference example R1 was evaluated in the same manner and the result is shown in Table 1.

**[Table 1]**

| **No** | **composition of suspension (weight part)** | | | | | | | | **evaluation** | | |
|---|---|---|---|---|---|---|---|---|---|---|---|
| | **silica- based fiber** | **sepiolite** | **mica** | **glass fiber** | **potassium titanate** | **pulp fiber** | **PET fiber** | **latex** | **back surface temperature after flame exposure (10imins) (°C)** | **appearance after flame exposure test** | **bulk density Kg/m³** |
| **1** | **baked 63** | **30** | **0** | **2** | **0** | **0** | **5** | **0** | **440** | **no crack** | **223.3** |
| **2** | **baked 63** | **0** | **30** | **2** | **0** | **0** | **5** | **0** | **405** | **crack** | **168** |
| **3** | **unbaked 95** | **0** | **0** | **0** | **0** | **0** | **5** | **0** | **352** | **large crack** | **181** |
| **4** | **unbaked 60** | **15** | **0** | **15** | **0** | **0** | **5** | **5** | **356** | **no crack** | **261** |
| **5** | **0** | **80** | **0** | **10** | **0** | **10** | **0** | **0** | **368** | **no crack** | **447** |
| **6** | **0** | **0** | **0** | **90** | **0** | **10** | **0** | **0** | **452** | **molten surface** | **183** |
| **7** | **unbaked 63** | **0** | **0** | **15** | **15** | **7** | **0** | **0** | **337** | **no crack** | **189** |
| **R1** | **mica sheet (commercial product)** | | | | | | | | **413** | **no crack** | **2200** |

As for sheets Nos. 3, 4, and 7, a thermal enregy consumption at a high temperature may be expected due to dehydration condensation reaction by unbaked silica-based inorganic fibers contained therein. The temperature of the back surface of the sheet which was indirectly heated by flame was relatively low, indicating a thermal insulating effect. However, the sheet No. 3, which did not contain glass fiber or fibrous mineral, could not follow its shrinkage at high temperatures, and as a result, a crack was observed on the sheet after the test.

No.5 was a sheet mainly composed of a fibrous mineral and does not contain silica-based inorganic fiber. Neither notable shrinkage nor cracks were observed in the sheet after the flame exposure test. Regarding the bulk density, the sheet No.5 was lighter than the mica sheet, however, as compared with a sheet mainly composed of silica-based inorganic fibers (e.g., No.4), No.5 was relatively heavy. In addition, No.5 tended to be inferior to the sheet mainly composed of silica-based inorganic fibers in thermal insulation.

No.6 is a sheet containing glass fiber as a main ingredient. Since the glass fiber was molten at 1000°C such as exposure to flame, No.6 could not achieve a satisfactory thermal insulation. The glass fiber being molten by exposure to flame was confirmed by the fact that the original fibrous shape of the glass fiber was no longer observed in the area directly exposed to the flame or its surroundings, after the flame exposure test.

On the other hand, sheets Nos. 1 and 2, where a baked silica-based inorganic fiber was used as a silica-based inorganic fiber, did not shrink by flame exposure test. This indicates that shrinkage of a silica-based inorganic fiber might have been avoided by heat treatment beforehand. No crack was observed in sheet No. 1, while cracks were observed in Sheet No. 2. These observations indicate that sepiolite, due to its fibrous form, can entangle with other fibers and accommodate the volumetric expansion of the steel plate heated by flame. In contrast, mica, which has a flat shape, cannot entangle with other fibers.

Nos. 1 and 2, where a baked silica-based inorganic fiber was used, was inferior to Nos. 3 and 4 in thermal insulation effect. This result indicates that the baked silica-based inorganic fiber may not undergo dehydration condensation and cannot consume thermal energy.

### <Preparation of papermaking suspension, production and evaluation of thermal insulating inorganic particle-containing sheets No. 21 to 27>

The above-mentioned raw material components were admixed in a container containing 2000 cc of water to prepare a papermaking suspension having the composition (% by weight of solid content weight) shown in Table 2.

The order of addition or blend of the components was unbaked silica-based inorganic fiber, glass fiber, fibrous mineral, organic fiber (PET fiber), thermal insulating inorganic particle, inorganic binder, and flocculating agent (polyacrylamide). Polyacrylamide was added in a range of 3 cc to 18 cc while checking the floc state of the papermaking suspension.

When adopting a hydrophobic thermal insulating inorganic particle I, II, or III, the separately prepared slurry which contains a hydrophilized thermal insulating inorganic particle was used. The amount (% by weight) indicated in Table 2 is the solid content in the papermaking suspension.

When adopting a hydrophilic silica particle as a thermal insulating inorganic particle, the silica particle in a powdery state was added to the fiber-containing liquid.

The papermaking suspension prepared above was poured into a wet molding machine (filtering mesh screen #80 (openings of 180 to 200 µm)) and dewatered by suction.

A dewatered web was heated and dried with pressurization by a heat press machine (100°C) for 10 minutes. Thus, a square sheet having a length of 150mm on each side and a thickness of about 1.2 to 2.1 mm was obtained. Three sample sheets were produced from each papermaking suspension. The average yield calculated from the solid content of the papermaking suspension was from 80% to 90%.

The flame exposure test was conducted on the produced sheet, and the thermal conductivity (heat flux method) were measured after conducting the flame exposure test (exposing time: 5 minutes). The back surface temperature was mathematically converted to reflect a sheet thickness of 1.6mm, and the converted value was used. An average was calculated from the converted values of the three sheets and was indicated in Table 2. In addition, the appearance of the sheet after the flame exposure test, such as presence or absence of crack, was visually observed. The results are shown in Table 2.

Table 2 also shows the thermal conductivity of the sheet when the heat source was 200°C.

### Reference example R2:

When hydrophobic aerogel particles (powder) without hydrophilizing treatment were added directly to a fiber-containing liquid. Even with shaking and stirring, the powder of the hydrophobic aerogel particles floated on the surface of the water, in other words, the powder phase consisting of the hydrophobic aerogel particles was separated from the water phase. As a result, papermaking suspension where fibers and aerogel particles in a homogenously mixed state was not obtained.

### Reference example R3:

A polyoxyethylene/polyoxypropylene condensate, which is a nonionic surfactant, was used as the hydrophilizing agent. 10 g of the hydrophilizing agent was added to 100 g of water, and then 10 g of hydrophobic aerogel particles (powder) was added, followed by vigorously shaking to obtain a slurry containing thermal insulating inorganic particle. Thus prepared aerogel-containing slurry was added to a separately prepared fiber-containing liquid, however, the aerogel-containing slurry was separated from the fiber-containing liquid regardless of stirring, as a result, an evenly mixed liquid (papermaking suspension) could not be obtained.

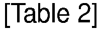

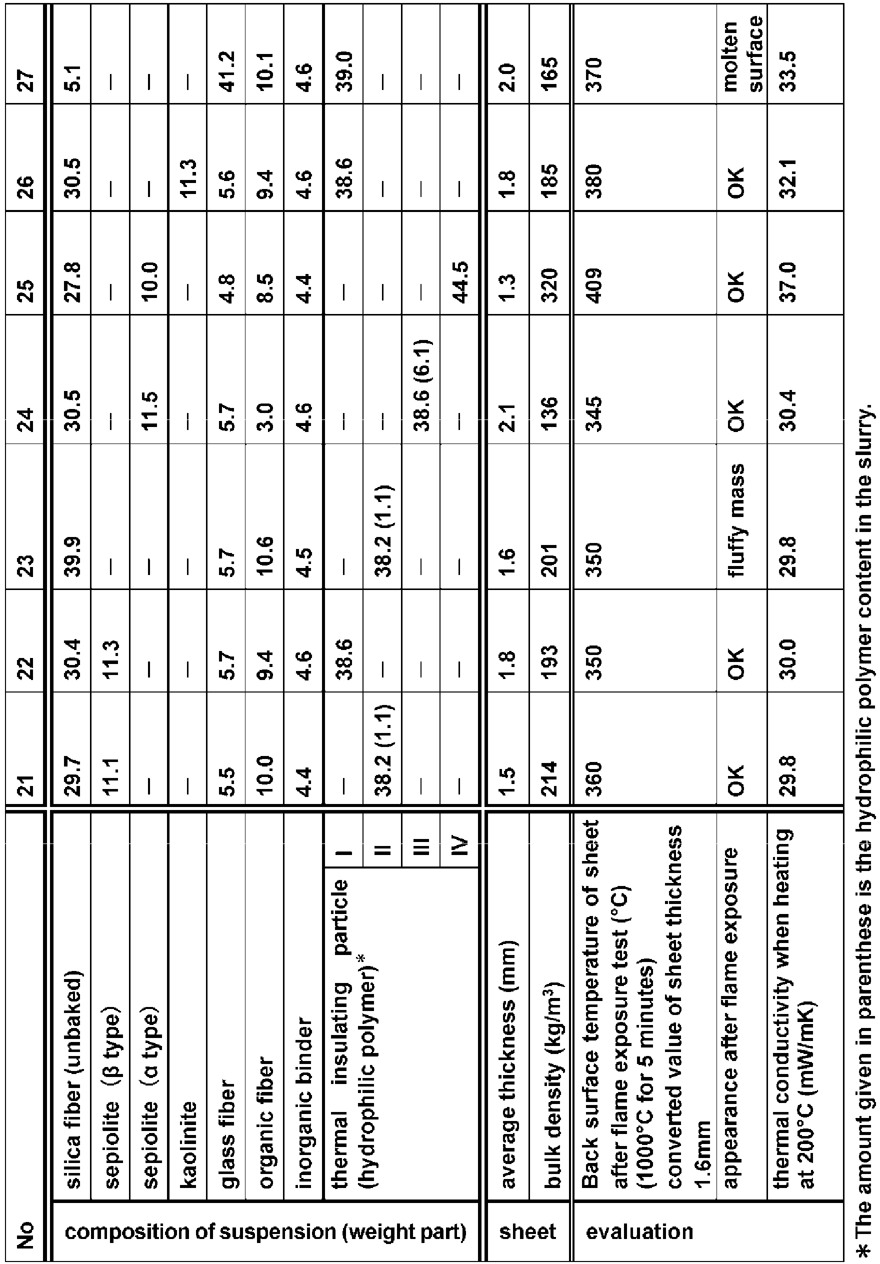

Regarding thermal conductivity when the heat source was 200°C, sheet Nos. 21-24, 26 and 27 containing a hydrophilized aerogel particle as the thermal insulating inorganic particle were superior to sheet No. 25 containing a hydrophilic nanoparticle as the thermal insulating inorganic particle. This superiority may be obtained by the presence of the hydrophilized aerogel particle throughout the sheet, as the hydrophobic aerogel particle with high porosity contained in the sheet can exhibit excellent thermal insulation due to air-pocket having a notably low thermal conductivity.

Further, from a comparison between No. 27 and No. 23, the sheet mainly composed of silica-based inorganic fiber had a lower thermal conductivity than the sheet mainly composed of glass fiber. This result may be due to the silica-based inorganic fibers having a lower thermal conductivity.

Regarding the back surface temperature of the sheet after the flame exposure test, sheets Nos. 21, 22, 23, 24, 26, and 27, each of which contains a hydrophilized aerogel particle as a thermal insulating inorganic particle, had a lower temperature than sheet No. 25.

Such a thermal insulating effect may be derived from silica fibers with hydroxyl groups in addition to the hydrophilized aerogel particle. The hydrophilized aerogel particle can exert thermal insulation in norm where an ambient temperature is below 200°C. In the event of a temperature spike due to thermal runaway, the silica fibers may delay the rapid rise in temperature, and moreover the aerogel particle can exert thermal insulation. As a result, the temperature spike may be mitigated in the whole sheet.

No cracks were observed in the sheet Nos. 21-27 after conducting the flame exposure test. This result may be derived from the sheet containing unbaked silica fibers and glass fibers in a glass fiber/silica fiber ratio of 1/10 or more.

In the case of unduly high content of glass fiber relative to that of the silica fiber, glass fiber was molten by flame exposure. It was recognized from the sheet No. 27, which had a content ratio of glass fiber/silica fiber not less than 8/1.

However, sheet No. 23, which lacked clay mineral and had a content ratio of glass fiber to silica fiber (glass fiber/silica fiber) more than 1/7, lost its sheet shape and instead broke down into soft, fluffy masses when exposed to flame.

From the comparison between No.22 and No.26, it is considered that the use of a fibrous mineral as the clay mineral may impart a higher thermal insulation. The superiority of the fibrous mineral in thermal insulating effect may be recognized not only in a normal use but also in a condition of exposure to flame. In a normal use. the thermal energy may be consumed through dehydration of the adsorbed water in sepiolite. Since the fibrous mineral may increase opening pore of the resulting sheet comparing to the planar mineral, the sheet No.22 employing the fibrous mineral may have higher porosity in a whole sheet than the sheet No.26. In high-temperature ranges such as exposure to flame, the more thermal energy may be released due to many opening pores in the sheet. Note that the sheet No. 26 was inferior in handling property due to low hardness and relatively low strength, as compared with other sheets.

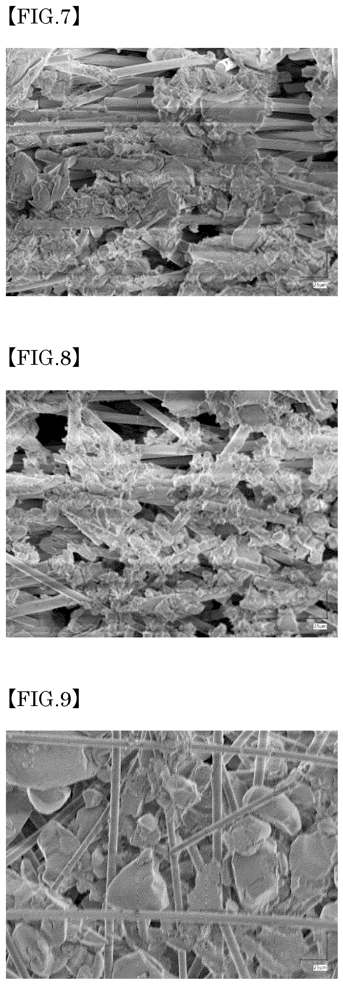

Fig. 7 and Fig. 8 show photographs taken with an electron microscope (magnification of 1000 times) of the cross section in the thickness direction of sheets No. 21 and No. 23 respectively.

It can be recognized from these micrographs that the thermal insulating inorganic particles are present throughout the sheet, intertwined with the fibers or embedded in the gaps between the fibers.

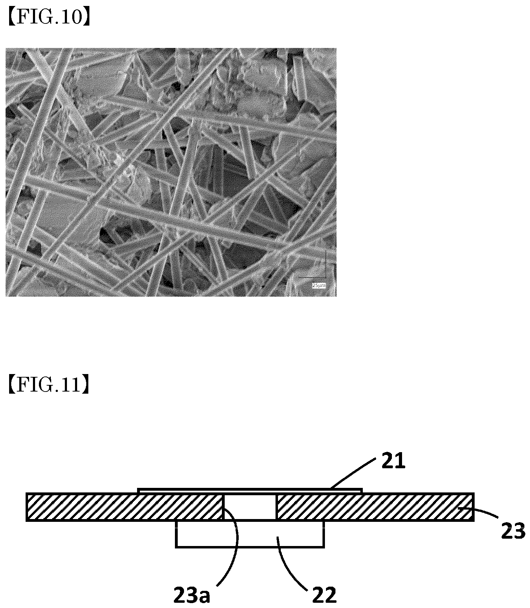

Fig. 9 and Fig 10. show photographs taken with an electron microscope (magnification of 1000 times) of the heated surfaces of sheets Nos. 21 and 23 during the flame exposure test.

From these micrographs, it can be confirmed that silica-based inorganic fibers, thermal insulating inorganic particle, and fibrous clay mineral (in the case of No. 21) could still be retained.

### <Comparison of thermal insulating performance between silica-based inorganic fiber and glass fiber>

The thermal insulating/flame barrier sheets Nos. 23 and 27 produced above were subjected to a thermal insulation test by heating at 700°C in the following manner.

### (1) Thermal insulation test I

As shown in Fig. 11, a ceramic insulation board 23 (a square with 300 mm side length and 15 mm thickness) having a circular opening 23a of 40 mm in diameter was placed on a hot plate 22 (a square with 100 mm side length) having a temperature of 700°C. Then, the sheet 21 (a square with 150 mm side length) was placed on top of the board 23, and positioned so that its center aligned with the center of the circular opening 23a of the board 23. After keeping for 6 minutes, the sheet was evaluated.

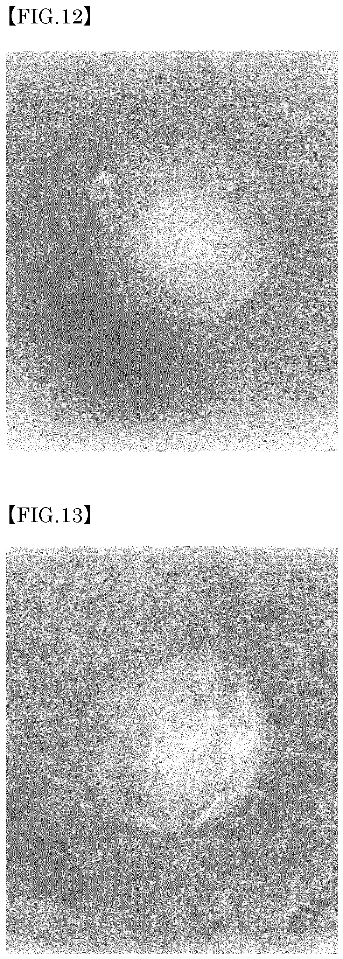

Photographs of the heated portions of sheets Nos. 23 and 27 after the test are shown in Figs. 12 and 13, respectively.

Comparing the two, sheet No. 23 retained the state after papermaking, while glass fiber in the sheet No. 27 lifted up from the sheet plane due to the reduced elasticity, which indicates that the sheet shape in the heated portion could not be retained.

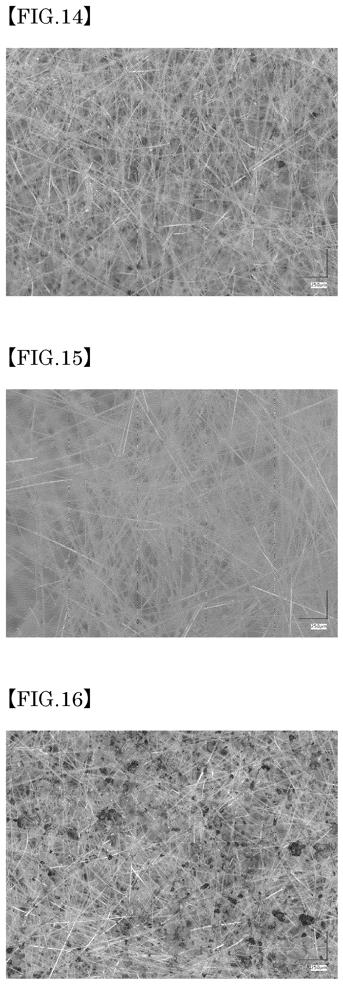

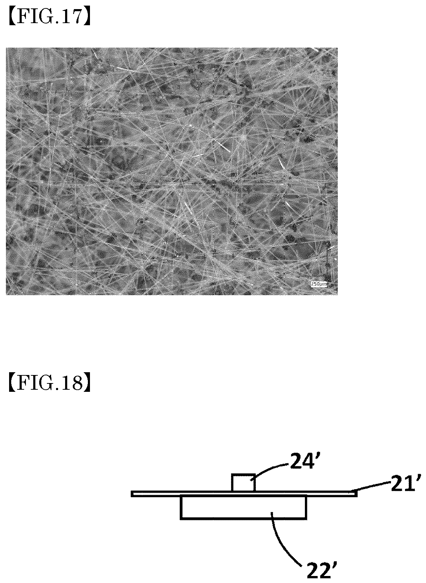

A photograph of the heated surface of sheets Nos. 23 and 27 was taken using a microscope (magnification of 100 times) and shown in Figs. 14 and 15, respectively. Another photographs of the opposite side (referred to as the back surface) of sheets Nos. 23 and 27 were taken using a microscope (magnification of 100 times) and shown in Figs. 16 and 17, respectively.

Comparing Fig. 15 (heated surface) and Fig. 17 (back surface) for sheet No. 27, it can be recognized that the heated surface had more portions where the fibers were molten and fused, and the area of the molten and fused portions were larger. Regarding the sheet No. 23, most of the fibers retained their fibrous shape even on the heated surface (Figs. 14 and 16). The sheet No. 27 mainly comprised of glass fiber. Some glass fibers in the sheet No. 27 began to melt at 700°C, and were decreased in elasticity and strength. Therefore, intertwining between the fibers remaining their fibrous state was reduced, as a result, the remained fibers could lift up from the sheet plane.

### (2) Thermal insulation test II

As shown in Fig. 18, a thermal insulating/flame barrier sheet 21' (150 mm × 150 mm) to be evaluated was placed on a SUS plate 22' (100 mm × 100 mm) equipped with a heater, and a thermocouple 24' was placed on the sheet positioning at the corresponding part of the heater. Then, the plate temperature and sheet temperature were measured.

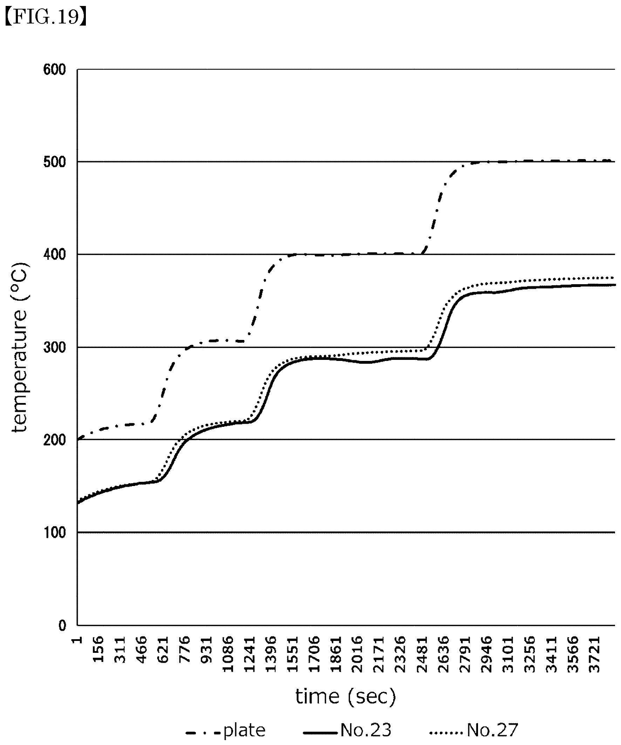

The thermal insulation was measured by increasing the heater's temperature by 100°C, ranging from 200°C to 500°C. At each temperature, the sheet was heated for 10 minutes. Fig. 19 shows the results of temperature of the sheet during escalation of the heater's temperature. The long dashed dotted line represents the temperature of the heater, the solid line represents the temperature of sheet No. 23, and the dashed line represents the temperature of sheet No. 27.

During heating ranging from 300°C to 500°C, the temperature of the sheet No. 23 tended to be lower by about 3 to 6°C than that of No. 27. This indicates that the dehydration condensation of the silica-based inorganic fibers can delay the temperature rise.

### < Appendix>

The present invention also includes various modified embodiments that can be devised by those skilled in the art based on the above-described preferred embodiments and examples. The following embodiments are included in the present invention.
1. A thermal insulating/flame barrier sheet with a thickness of 3 mm or less comprising
   25 to 70% by weight of a silica-based inorganic fiber having a hydroxyl group;
   2 to 25% by weight of a glass fiber;
   5 to 40% by weight of a fibrous mineral; and
   3 to 20% by weight of a binder.
2. A thermal insulating/flame barrier sheet with a thickness of 3 mm or less comprising
   25 to 70% by weight of a silica-based inorganic fibers having a hydroxyl group;
   2 to 25% by weight of a glass fiber;
   5 to 40% by weight of a fibrous mineral;
   3 to 20% by weight of a binder; and
   more than 0 to 45% by weight of a thermal insulating inorganic particle;
   wherein the thermal insulating inorganic particle comprises a hydrophilized aerogel particle by treating the surface of a hydrophobic aerogel particle having a porosity of 80% or more and an average particle size of 5 to 200 µm, with a hydrophilizing agent.
3. The thermal insulating/flame barrier sheet according to the embodiment 1 or 2, wherein the content ratio in weight of the silica-based inorganic fiber to the glass fiber (silica-based inorganic fiber/glass fiber) is from 30/1 to 1.5/1.
4. The thermal insulating/flame barrier sheet according to any one of embodiments 1 to 3, wherein the thermal insulating/flame barrier sheet has a thickness of more than 0.5 mm.
5. The thermal insulating/flame barrier sheet according to any one of embodiments 2 to 4, wherein the hydrophobic aerogel has a contact angle of the hydrophobic aerogel particle to water of 100° or more.
6. The thermal insulating/flame barrier sheet according to embodiment 5, wherein the hydrophilized aerogel particle is obtained by contacting the surface of the hydrophobic aerogel particle with an organic solvent, a surfactant, or a hydrophilic polymer.
7. The thermal insulating/flame barrier sheet according to embodiment 6, wherein the hydrophilized aerogel particle is obtained by covering at least a portion of the surface of hydrophobic silica aerogel particle having a porosity of 90% or more and an average particle size of 5 to 200 µm, with a hydrophilic polymer.
8. The thermal insulating/flame barrier sheet according to any one of embodiments 5 to 7, wherein the hydrophobic aerogel particle has a surface area of 300 to 1000 m²/g.
9. The thermal insulating/flame barrier sheet according to any one of embodiments 5 to 8, wherein the hydrophobic aerogel particle has a particle density of 100 to 200 g/cm³.
10. The thermal insulating/flame barrier sheet according to any one of embodiments 5 to 9, wherein the hydrophilic polymer is a polymer having a plurality of hydroxyl groups.
11. The thermal insulating/flame barrier sheet according to embodiment 10, wherein the hydrophilic polymer is a water-soluble polymer.
12. The thermal insulating/flame barrier sheet according to embodiment 10 or 11, wherein the amount of the hydrophilic polymer relative to the amount of the hydrophobic aerogel particle in the hydrophilized aerogel particle is from 1/2 to 1/100 in terms of the ratio in weight of hydrophilic polymer/hydrophobic aerogel particle.
13. The thermal insulating/flame barrier sheet according to any one of embodiments 2 to 12, wherein the thermal insulating inorganic particle further comprises a nanoparticle having a hydrophilic surface and having an average primary particle size of 1 nm to 50 nm.
14. The thermal insulating/flame barrier sheet according to any one of embodiments 1 to 13, wherein the fibrous mineral is at least one selected from the group consisting of sepiolite, palygorskite, potassium titanate whiskers, and wollastonite.
15. The thermal insulating/flame barrier sheet according to any one of embodiments 1 to 13, wherein the fibrous mineral is potassium titanate whisker or wollastonite.
16. The thermal insulating/flame barrier sheet according to any one of embodiments 1 to 13, wherein the fibrous mineral is a layered silicate mineral.
17. The thermal insulating/flame barrier sheet according to embodiment 16, wherein the silicate mineral is α-type sepiolite or β-type sepiolite.
18. The thermal insulating/flame barrier sheet according to any one of embodiments 1 to 17, wherein the binder contains a thermoplastic resin fiber.
19. The thermal insulating/flame barrier sheet according to any one of embodiments 1 to 18, wherein the binder includes an organic flocculant.
20. The thermal insulating/flame barrier sheet according to any one of embodiments 1 to 19, wherein the binder includes an inorganic binder.
21. The thermal insulating/flame barrier sheet according to embodiment 20, wherein the inorganic binder contains colloidal silica.
22. The thermal insulating/flame barrier sheet according to embodiment 20 or 21, wherein the inorganic binder contains an inorganic metal salt.
23. The thermal insulating/flame barrier sheet according to any one of embodiments 1 to 22, having a bulk density of 100 to 400 kg/m³.
24. A method for producing a thermal insulating/flame barrier sheet comprising
   preparing a hydrophilized aerogel slurry where a silica aerogel particle having a hydrophobic surface, a porosity of 80% or more, and an average particle size of 5 to 200 µm are dispersed in an aqueous solution containing a hydrophilizing agent;
   adding and mixing the hydrophilized aerogel slurry to an aqueous dispersion containing a silica-based inorganic fiber having a hydroxyl group, a glass fiber, a fibrous mineral, and a binder, to prepare a suspension containing 25 to 70% by weight of the silica-based inorganic fiber, 2 to 25% by weight of the glass fiber, 5 to 40% by weight of the fibrous mineral, 3 to 20% by weight of the binder, and more than 0 to 45% by weight of hydrophilized aerogel; and
   papermaking process using the suspension to obtain a sheet with a thickness of less than 3 mm.
25. A method for producing a thermal insulating/flame barrier sheet according to any one of embodiments 2 to 23, comprising:
   preparing a hydrophilized aerogel slurry where a silica aerogel particle having a hydrophobic surface, a porosity of 80% or more, and an average particle size of 5 to 200 µm is dispersed in an aqueous solution of a water-soluble polymer;
   adding and mixing the hydrophilized aerogel slurry to an aqueous dispersion containing a silica-based inorganic fiber having a hydroxyl group, a glass fiber, a fibrous mineral, and a binder including a thermoplastic resin fiber; and
   papermaking process using the obtained liquid mixture, followed by heating and pressurizing to obtain a sheet with a thickness of less than 3 mm.
26. The method for producing the thermal insulating/flame barrier sheet according to embodiment 24 or 25, further comprising adding an inorganic binder and/or an organic flocculating agent to the obtained suspension or liquid mixture.
27. The method for producing the thermal insulating/flame barrier sheet according to any one of embodiment 24 to 26, wherein the content of the surfactant in the hydrophilized aerogel slurry is 10% by weight or less.
28. The method for producing the thermal insulating/flame barrier sheet according to any one of embodiments 24 to 27, wherein the hydrophilized aerogel slurry contains an organic solvent in a content of 10% by weight or less.
29. The method for producing the thermal insulating/flame barrier sheet according to any one of embodiments 1 to 28, wherein the dispersion medium of the aqueous dispersion is water.
30. A battery pack or a battery module comprising a plurality of battery cells connected in series or parallel and stored in a housing, comprising a sheet according to any one of embodiments 1 to 23 interposed between the battery cells.
31. A battery pack or a battery module comprising a plurality of battery cells connected in series or parallel and stored in a housing, and a sheet according to any one of the embodiments 1 to 23, wherein the sheet is adhered to an interior wall of the housing with which the battery cell is in contact.

### INDUSTRIAL APPLICABILITY

The thermal insulating/flame barrier sheet of the present invention is a lightweight and thin sheet like a paper, and can be interposed between the cells in a battery pack containing a plurality of lithium ion cells, particularly in a battery module enclosing the battery pack containing a plurality of cells stacked in a housing. In a normal use, the sheet insulates thermal energy from a certain cell having an increased temperature to adjacent cells. Furthermore, in the thermal runaway event of a certain cell, the sheet interposed between the cells can prevent the propagation of the thermal runaway in other cells within the battery module.

### DESCRIPTION OF CODE

- 9, 10: thermal insulating/flame barrier sheet
- 8, 11, 11': battery cell
- 12: housing

## Claims

1. A thermal insulating/flame barrier sheet with a thickness of 3 mm or less comprising
25 to 70% by weight of a silica-based inorganic fiber having a hydroxyl group;
2 to 25% by weight of a glass fiber;
5 to 40% by weight of a fibrous mineral;
3 to 20% by weight of a binder; and
0 to 45% by weight of a thermal insulating inorganic particle;
wherein the thermal insulating inorganic particle comprises a hydrophilized aerogel particle obtained by treating a hydrophobic aerogel particle having a porosity of 80% or more and an average particle size of 5 to 200 µm, with a hydrophilizing agent.

2. The thermal insulating/flame barrier sheet according to claim 1, wherein the content ratio in weight of the silica-based inorganic fiber to the glass fiber, silica-based inorganic fibers/glass fibers, is from 30/1 to 1.5/1.

3. The thermal insulating/flame barrier sheet according to claim 1 or 2, wherein the hydrophilized aerogel particle is obtained by contacting the surface of the hydrophobic aerogel particle with an organic solvent, a surfactant, or a hydrophilic polymer.

4. The thermal insulating/flame barrier sheet according to claim 3, wherein the hydrophilized aerogel particle comprises a hydrophobic aerogel particle having a surface covered with a hydrophilic polymer.

5. The thermal insulating/flame barrier sheet according to any one of claims 1 to 4, wherein a ratio in weight of the hydrophilic polymer to the hydrophobic aerogel particle in the hydrophilized aerogel particle is from 1/2 to 1/100 in terms of hydrophilic polymer/hydrophobic aerogel particle.

6. The thermal insulating/flame barrier sheet according to any one of claims 1 to 5, wherein the fibrous mineral is at least one selected from the group consisting of sepiolite, palygorskite, potassium titanate whiskers, and wollastonite.

7. The thermal insulating/flame barrier sheet according to any one of claims 1 to 6, wherein the binder comprises a thermoplastic resin fiber.

8. The thermal insulating/flame barrier sheet according to any one of claims 1 to 7, wherein the binder comprises an organic flocculating agent.

9. The thermal insulating/flame barrier sheet according to any one of claims 1 to 8, wherein the binder comprises an inorganic binder.

10. The thermal insulating/flame barrier sheet according to claim 9, wherein the inorganic binder comprises a colloidal silica and/or an inorganic metal salt.

11. The thermal insulating/flame barrier sheet according to any one of claims 1 to 10, having a bulk density of 100 to 400 kg/m³.

12. A method for producing a thermal insulating/flame barrier sheet comprising
preparing a hydrophilized aerogel slurry where a silica aerogel particle having a hydrophobic surface, a porosity of 80% or more, and an average particle size of 5 to 200 µm is dispersed in an aqueous solution containing a hydrophilizing agent;
adding and mixing the hydrophilized aerogel slurry to an aqueous dispersion containing a silica-based inorganic fiber having hydroxyl groups, a glass fiber, a fibrous mineral, and a binder, to prepare a suspension containing 25 to 70% by weight of the silica-based inorganic fiber, 2 to 25% by weight of the glass fiber, 5 to 40% by weight of the fibrous mineral, 3 to 20% by weight of the binder, and more than 0 to 45% by weight of the hydrophilized aerogel; and
papermaking process using the suspension to obtain a sheet with a thickness of less than 3 mm.

13. A method for producing a thermal insulating/flame barrier sheet, the sheet according to any one of claims 1 to 11 and comprising the thermal insulating inorganic particles, the method comprising
preparing a hydrophilized aerogel slurry where a silica aerogel particle having a hydrophobic surface, a porosity of 80% or more, and an average particle size of 5 to 200 µm is dispersed in an aqueous solution of a water-soluble polymer;
adding and mixing the hydrophilized aerogel slurry to an aqueous dispersion containing a silica-based inorganic fiber having a hydroxyl group, a glass fiber, a fibrous mineral, and a binder including a thermoplastic resin fiber; and
papermaking process using the obtained liquid mixture, followed by heating and pressurizing to obtain a sheet with a thickness of less than 3 mm.

14. The method for producing the thermal insulating/flame barrier sheet according to claim 12 or 13, wherein the hydrophilized aerogel slurry contains a surfactant in a content of 10% by weight or less.

15. The method for producing the thermal insulating/flame barrier sheet according to claim 12 or 13, wherein the hydrophilized aerogel slurry contains an organic solvent in a content of 10% by weight or less.

16. A battery pack or a battery module, comprising a plurality of cells connected in series or parallel, and a housing enclosing the cells, comprising a sheet according to any one of claims 1 to 11 placed between the cells.

17. A battery pack or a battery module, comprising a plurality of cells connected in series or parallel, and a housing enclosing the cells, comprising a sheet according to any one of claims 1 to 11 which is adhered between an interior surface of the housing and the cells.
